# EUROPÄISCHE PATENTSCHRIFT

(11) **EP 1 856 424 B1**
(45) Veröffentlichungstag und Bekanntmachung des Hinweises auf die Patenterteilung: **06.10.2010**
(21) Anmeldenummer: 06723182.9
(22) Anmeldetag: 03.03.2006
(51) Int. Cl.: F16H 3/66

(54) **MEHRSTUFENGETRIEBE**
MULTI-STEP TRANSMISSION
DEMULTIPLICATEUR MULTI-ETAGE

(30) Priorität: 05.03.2005 DE 102005010210
(43) Veröffentlichungstag der Anmeldung: 21.11.2007
(73) Patentinhaber: ZF FRIEDRICHSHAFEN Aktiengesellschaft, 88038 Friedrichshafen (DE)
(72) Erfinder: DIOSI, Gabor, 88045 Friedrichshafen (DE); HAUPT, Josef, 88069 Tettnang (DE); GUMPOLTSBERGER, Gerhard, 88045 Friedrichshafen (DE); ZIEMER, Peter, 88069 Tettnang (DE); BREHMER, Martin, 88069 Tettnang (DE)
(86) Internationale Anmeldenummer: PCT/EP2006/001937
(87) Internationale Veröffentlichungsnummer: WO 2006/094711

(56) Entgegenhaltungen:
- DE-A1- 4 234 572
- DE-A1- 10 162 893
- US-A- 4 046 031
- US-B1- 6 634 980

## Beschreibung

Die vorliegende Erfindung betrifft ein Mehrstufengetriebe in Planetenbauweise, insbesondere ein Automatgetriebefür ein Kraftfahrzeug.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Ein derartiges Mehrgang-Automatgetriebe geht beispielsweise aus der DE 199 49 507 A1 der als nächsliegender Stand der Technik angesehen wird, der Anmelderin hervor. Es umfasst im Wesentlichen eine Antriebswelle und eine Abtriebswelle, die koaxial zueinander angeordnet sind, insgesamt vier Planetenradsätze und mehrere Reibschaltelemente. An der Antriebswelle sind zwei nicht schaltbare Vorschaltplanetenradsätze vorgesehen, die ausgangsseitig zwei Drehzahlen erzeugen, die neben der Drehzahl der Antriebswelle wahlweise auf verschiedene Eingangselemente eines auf die Abtriebswelle wirkenden, schaltbaren, mehrgliedrigen Hauptradsatzes durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss. Der Hauptradsatz ist wiederum als Zweisteg-Vierwellen-Planetenradsatz ausgebildet, dessen beide Planetenradsätze über zwei Elemente fest miteinander gekoppelt sind. Unter Verwendung von fünf Schaltelementen sind dabei sieben Vorwärtsgänge gruppenschaltungsfrei schaltbar, unter Verwendung von sechs Schaltelementen sogar neun oder zehn Vorwärtsgänge.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens acht Vorwärtsgänge ohne Gruppenschaltung schaltbar sind. Der Vorschaltsatz wird aus einem schaltbaren oder nicht schaltbaren Planetenradsatz oder aus maximal zwei nicht schaltbaren, miteinander gekoppelten Planetenradsätzen gebildet. Der Nachschaltsatz ist als Zweisteg-Vierwellen-Getriebe mit zwei schaltbaren Nachschalt-Planetenradsätzen ausgebildet und weist vier freie Wellen auf. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement und die erste freie Welle zusätzlich mit einem siebten Schaltelement zu verbinden.

Mehrere andere Mehrstufengetriebe sind beispielsweise auch aus der DE 101 15 995 A1 der Anmelderin bekannt, bei denen vier schaltbare, miteinander gekoppelte Planetenradsätze und sechs oder sieben reibschlüssige Schaltelemente vorgesehen sind, durch deren selektives Schließen eine Drehzahl einer Antriebswelle des Getriebes derart auf eine Abtriebswelle des Getriebes übertragbar ist, dass neun oder elf Vorwärtsgänge und zumindest ein Rückwärtsgang schaltbar sind. Je nach Getriebeschema sind in jedem Gang zwei oder drei Schaltelemente geschlossen, wobei bei einem Wechsel von einem Gang in den jeweils nächstfolgend höheren oder nächstfolgend niedrigeren Gang zur Vermeidung von Gruppenschaltungen jeweils nur ein geschlossenes Schaltelement geöffnet und ein zuvor nicht geschlossenes Schaltelement zugeschaltet wird.

Ein 8-Gang-Mehrstufengetriebe ist ferner aus der DE 29 36 969 A1 bekannt, umfassend vier koaxiale Einfach-Planetenradsätze und acht Reibschaltelemente.

Ein Mehrstufen-Automatgetriebe ist ferner aus der US 4,683,776 bekannt, umfassend vier Einfach-Planetenradsätze und sechs Reibschaltelemente. Alle vier Planetenradsätze sind als so genannte Minus-Planetenradsätze in Einfachplanetenbauweise ausgeführt. Die vom Antrieb her gesehen ersten beiden Planetenradsätze bilden einen schaltbaren Vorschaltradsatz und sind über zwei Koppelwellen fest miteinander verbunden, wobei die erste Koppelwelle dieses Vorschaltradsatzes dessen beide Sonnenräder fest miteinander und fest mit der Antriebswelle des Getriebes verbindet, und wobei die zweite Koppelwelle des Vorschaltradsatzes das Hohlrad des ersten Planetenradsatzes und den Steg des zweiten Planetenradsatzes fest miteinander verbindet und gleichzeitig die Ausgangswelle des Vorschaltradsatzes bildet. Die anderen beiden Elemente des Vorschaltradsatzes - also der Steg des ersten Planetenradsatzes und das Hohlrad des zweiten Planetenradsatzes - sind jeweils über eine eigene Bremse am Getriebegehäuse festsetzbar. Der dritte und vierte Planetenradsatz bilden einen schaltbaren Hauptradsatz und sind ebenfalls über zwei Koppelwellen fest miteinander verbunden, wobei die erste Koppelwelle dieses Hauptradsatzes dessen beide Sonnenräder fest miteinander verbindet und mit der Antriebswelle des Getriebes verbindbar ist, und wobei die zweite Koppelwelle des Hauptradsatzes den Steg des dritten Planetenradsatzes fest mit dem Hohlrad des vierten Planetenradsatzes verbindet und ebenfalls mit der Antriebswelle verbindbar ist und wahlweise auch über eine Bremse am Getriebegehäuse festsetzbar ist. Das Hohlrad des dritten Planetenradsatzes als weiteres Eingangselement des Hauptradsatzes ist mit der Ausgangswelle des Vorschaltradsatzes fest verbunden und über eine weitere Bremse am Getriebegehäuse festsetzbar. Der Steg des vierten Planetenradsatzes schließlich bildet das Ausgangselement des Hauptradsatzes und ist fest mit der Abtriebswelle des Getriebes verbunden. Das Getriebe weist insgesamt neun gruppenschaltungsfrei schaltbare Vorwärtsgänge und einen Rückwärtsgang auf, die durch selektives paarweises Sperren von jeweils zwei der sechs Schaltelemente erzielt werden.

Weiterhin ist aus der US 6,176,803 B1 ein 9-Gang-Automatgetriebe mit vier koaxial zueinander angeordneten und miteinander gekoppelten schaltbaren Einfach-Planetenradsätzen bekannt, das dem zuvor genannten Automatgetriebe gemäß US 4,683,776 im Aufbau stark ähnelt. Wie in der US 4,683,776 sind insgesamt sechs Reibschaltelemente vorgesehen, von denen zwei als Lamellenkupplung und vier als Lamellenbremse ausgeführt sind. Der vom Antrieb her gesehen erste der vier Planetenradsätze ist im Unterschied zur US 4,683,776 als ein so genannter Plus-Planetenradsatz in Doppelplanetenbauweise ausgeführt. Die anderen drei Planetenradsätze sind wie in der US 4,683,776 als so genannte Minus-Planetenradsätze in Einfachplanetenbauweise ausgeführt. Bis auf die Koppelung des Sonnenrades des zweiten Planetenradsatzes nunmehr mit dem Steg des ersten (Plus-)Planetenradsatzes ist die bauteilseitige Kopplung der Planetenradsätze untereinander, zu den beiden Kupplungen bzw. zur Antriebswelle, zu den vier Bremsen sowie zur Abtriebswelle identisch ist zur US 4,683,776. Im Prinzip arbeitet bei dem 9-Gang-Automatgetriebe gemäß US 6,176,803 B1 also nur der Plus-Planetenradsatz als Vorschaltradsatz, wobei die anderen drei Planetenradsätze dann den Hauptradsatz des Getriebes bilden.

Ähnliche Mehrstufen-Automatgetriebe mit neun gruppenschaltungsfrei schaltbaren Vorwärtsgängen sind ferner aus der DE 4238025 A1 bekannt, umfassend vier koaxiale Einfach-Planetenradsätze und sechs oder sieben Reibschaltelemente (vier Lamellenbremsen und zwei oder drei Lamellenkupplungen). Dabei bilden die beiden vom Antrieb her gesehen ersten beiden Planetenradsätze stets einen mit der Antriebswelle des Getriebes fest verbundenen schaltbaren, über zwei Koppelwellen gekoppelten Vorschaltradsatz, bei dem einer seiner Planetenradsätze als Plus-Planetenradsatz in Doppelplanetenbauweise und der andere seiner Planetenradsätze als Minus-Planetenradsatz in Einfachplanetenbauweise ausgeführt sind. Die anderen beiden Planetenradsätze bilden einen als Zweisteg-Vierwellen-Planetengetriebe ausgeführten schaltbaren Hauptradsatz identisch zur US 4,683,776.

Automatisch schaltbare Fahrzeuggetriebe in Planetenbauweise im Allgemeinen sind im Stand der Technik also bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in PKW als auch NKW geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art mit zumindest acht Vorwärtsgängen und zumindest einem Rückwärtsgang vorzuschlagen, bei dem unter Verwendung von insgesamt vier Planetenradsätzen eine möglichst geringe Anzahl an Schaltelementen benötigt wird. Dabei sollen alle Vorwärtsgänge bei sequentieller Schaltweise gruppenschaltungsfrei schaltbar sein, d.h. bei einem Wechsel von einem Vorwärtsgang in den nachfolgend höheren oder in den nachfolgend niedrigeren Vorwärtsgang soll jeweils nur ein zuvor geschlossenes Schaltelement geöffnet und ein zuvor nicht geöffnetes Schaltelement geschlossen werden. Zudem soll das Getriebe eine große Spreizung bei vergleichsweise harmonischer Gangabstufung aufweisen und in den Hauptfahrgängen einen günstigen Wirkungsgrad - also vergleichsweise geringe Schlepp- und Verzahnungsverluste - aufweisen.

Diese Aufgabe wird erfindungsgemäß durch ein Mehrstufengetriebe mit den Merkmalen des Patentanspruchs 1 gelöst. Weitere vorteilhafte Ausgestaltungen und Weiterbildungen gehen aus den Unteransprüchen hervor.

Demnach wird ein erfindungsgemäßes Mehrstufengetriebe in Planetenbauweise vorgeschlagen, welches eine Antriebswelle, eine Abtriebswelle, vier Planetenradsätze, mindestens acht drehbare Wellen sowie fünf Schaltelemente - zwei Bremsen und drei Kupplungen - aufweist, deren selektives Eingreifen verschiedene Übersetzungsverhältnisse zwischen der Antriebswelle und der Abtriebswelle bewirkt, so dass acht Vorwärtsgänge und ein Rückwärtsgang realisierbar sind.

Gemäß der Erfindung ist ein Hohlrad des ersten Planetenradsatzes und die Antriebswelle verdrehfest miteinander verbunden und bilden die erste Welle des Getriebes. Ein Steg des vierten Planetenradsatzes und die Abtriebswelle sind verdrehfest miteinander verbunden und bilden die zweite Welle des Getriebes. Ein Sonnenrad des zweiten Planetenradsatzes und ein Sonnenrad des dritten Planetenradsatzes sind verdrehfest miteinander verbunden und bilden die dritte Welle des Getriebes. Ein Hohlrad des zweiten Planetenradsatzes bildet die vierte Welle des Getriebes. Ein Hohlrad des dritten Planetenradsatzes bildet die fünfte Welle des Getriebes. Ein Steg des zweiten Planetenradsatzes und ein Hohlrad des vierten Planetenradsatzes sind verdrehfest miteinander verbunden und bilden die sechste Welle des Getriebes. Ein Sonnenrad des ersten Planetenradsatzes und ein Sonnenrad des vierten Planetenradsatzes sind verdrehfest miteinander verbunden und bilden die siebte Welle des Getriebes. Ein Steg des ersten Planetenradsatzes und ein Steg des dritten Planetenradsatzes sind verdrehfest miteinander verbunden und bilden die achte Welle des Getriebes.

Hinsichtlich der Anbindung der fünf Schaltelemente an die verschiedenen Elemente des Planetenradsätze und an die Antriebswelle des Getriebes wird gemäß der Erfindung vorgeschlagen, dass das erste Schaltelement im Kraftfluss zwischen der dritten Welle und einem Gehäuse des Getriebes angeordnet ist, dass das zweite Schaltelement im Kraftfluss zwischen der vierten Welle und dem Gehäuse des Getriebes angeordnet ist, dass das dritte Schaltelement im Kraftfluss entweder zwischen der ersten und siebten Welle oder zwischen der ersten und achten Welle oder zwischen der siebten und achten Welle angeordnet ist, dass das vierte Schaltelement im Kraftfluss zwischen der fünften und sechsten Welle angeordnet ist, und dass das fünfte Schaltelement im Kraftfluss zwischen der fünften und siebten Welle angeordnet ist. Durch die drei verschiedenen kinematischen Kopplungsmöglichkeiten des dritten Schaltelementes an die verschiedenen Wellen des Getriebes ergibt sich erfindungsgemäß somit eine ganze Getriebefamilie.

Gemäß der Erfindung ergibt sich der erste Vorwärtsgang durch Schließen des ersten, zweiten und dritten Schaltelementes, der zweite Vorwärtsgang durch Schließen des ersten, zweiten und fünften Schaltelementes, der dritte Vorwärtsgang durch Schließen des zweiten, dritten und fünften Schaltelementes, der vierte Vorwärtsgang durch Schließen des zweiten, vierten und fünften Schaltelementes, der fünfte Vorwärtsgang durch Schließen des zweiten, dritten und vierten Schaltelementes, der sechste Vorwärtsgang durch Schließen des dritten, vierten und fünften Schaltelementes, der siebte Vorwärtsgang durch Schließen des ersten, dritten und vierten Schaltelementes und der achte Vorwärtsgang durch Schließen des ersten, vierten und fünften Schaltelementes. Ein Rückwärtsgang ergibt sich durch Schließen des ersten, zweiten und vierten Schaltelementes.

Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen.

Hinsichtlich der räumlichen Anordnung der vier Planetenradsätze im Gehäuse des Getriebes wird in einer vorteilhaften Ausgestaltung vorgeschlagen, alle vier Planetenradsätze koaxial zueinander nebeneinander anzuordnen, in einer Reihenfolge "erster, dritter, zweiter, vierter Planetenradsatz". Für eine Anwendung mit koaxial zueinander verlaufender Antriebs- und Abtriebswelle ist es in diesem Fall zweckmäßig, dass der erste Planetenradsatz der dem Antrieb des Getriebes zugewandte Planetenradsatz der erfindungsgemäßen Planetenradsatzgruppe ist. In Verbindung mit der räumlichen Planetenradsatz-Reihenfolge "erster, dritter, zweiter, vierter Planetenradsatz" ist es zweckmäßig, das erste und zweite Schaltelement räumlich gesehen axial nebeneinander in einem Bereich radial über den Planetenradsätzen anzuordnen, insbesondere in einem Bereich radial über dem zweiten und/oder dritten Planetenradsatz.

In einer anderen vorteilhaften Ausgestaltung wird hinsichtlich der räumlichen Anordnung der vier Planetenradsätze relativ zueinander vorgeschlagen, alle vier Planetenradsätze in einer Reihenfolge "zweiter, dritter, erster, vierter Planetenradsatz" koaxial zueinander nebeneinander anzuordnen. Für eine Anwendung mit koaxial zueinander verlaufender Antriebs- und Abtriebswelle ist es in diesem Fall zweckmäßig, dass der zweite Planetenradsatz der dem Antrieb des Getriebes zugewandte Planetenradsatz der erfindungsgemäßen Planetenradsatzgruppe ist. In Verbindung mit dieser räumlichen Planetenradsatz-Reihenfolge "zweiter, dritter, erster, vierter Planetenradsatz" können das erste und zweite Schaltelement räumlich gesehen axial nebeneinander oder auch radial übereinander in einem Bereich nahe dem zweiten Planetenradsatz und nahe einer radialen Getriebegehäusewand angeordnet sein.

Darüber hinaus eignen sich beide genannten räumlichen Anordnungen der vier Planetenradsätze relativ zueinander auch für eine nicht-koaxiale Anordnung von Antrieb- und Abtriebswelle des Getriebes, beispielsweise für einen achsparallelen oder winkligen An- und Abtrieb.

Durch die erfindungsgemäße Ausgestaltung des Mehrstufengetriebes ergeben sich insbesondere für Personenkraftwagen geeignete Übersetzungen mit großer Gesamtspreizung in harmonischer Gangabstufung, wodurch ein guter Fahrkomfort und eine signifikante Verbrauchsabsenkung erzielt werden.

Darüber hinaus wird mit dem erfindungsgemäßen Mehrstufengetriebe durch eine geringe Anzahl an. Schaltelementen, nämlich zwei Bremsen und drei Kupplungen, der Bauaufwand vergleichsweise gering. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich hierfür eine der beiden Bremsen, die im ersten und zweiten Vorwärtsgang und im Rückwärtsgang betätigt wird.

Darüber hinaus ergibt sich bei dem erfindungsgemäßen Mehrstufengetriebe ein guter Wirkungsgrad in den Hauptfahrgängen einerseits infolge geringer Schleppverluste, da in jedem Gang jeweils nur zwei Schaltelemente nicht im Eingriff sind, andererseits auch infolge geringer Verzahnungsverluste in den einfach aufgebauten Einzel-Planetenradsätzen.

Außerdem ist das erfindungsgemäße Mehrstufengetriebe derart konzipiert, dass eine Anpassbarkeit an unterschiedliche Triebstrangausgestaltungen sowohl in Kraftflussrichtung als auch in räumlicher Hinsicht ermöglicht wird. So ist es beispielsweise ohne besondere konstruktive Maßnahmen möglich, Antrieb und Abtrieb des Getriebes wahlweise koaxial oder achsparallel zueinander anzuordnen.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungs- beispiels eines erfindungsgemäßen Mehrstufengetriebes;
- Figur 2: eine schematische Darstellung eines zweiten Ausführungs- beispiels eines erfindungsgemäßen Mehrstufengetriebes;
- Figur 3: eine schematische Darstellung eines dritten Ausführungs- beispiels eines erfindungsgemäßen Mehrstufengetriebes;
- Figur 4: ein beispielhaftes Schaltschema für die Mehrstufengetriebe gemäß Figur 1, 2 und 3; und
- Figur 5: eine beispielhafte Bauteilanordnungs-Variante für das Mehr- stufengetriebe gemäß Figur 1.

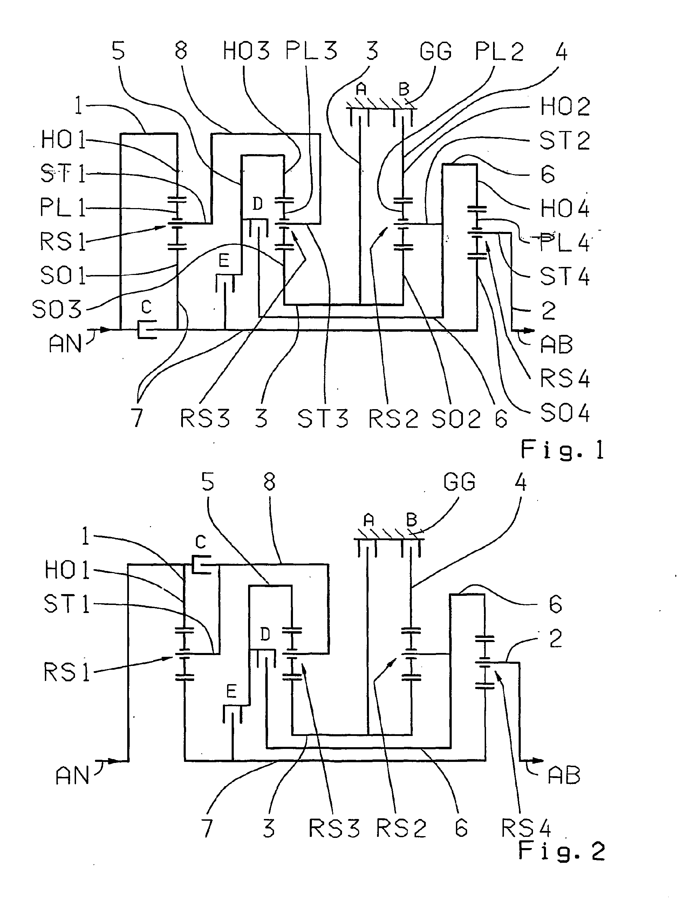

In Figur 1 ist ein erstes Ausführungsbeispiel einer erfindungsgemäßen Mehrstufengetriebes dargestellt. Das Getriebe umfasst eine Antriebswelle AN, und eine Abtriebswelle AB, sowie vier Planetenradsätze RS1, RS2, RS3, RS4 und fünf Schaltelemente A, B, C, D, E, die alle in einem Gehäuse GG des Getriebes angeordnet sind. Alle vier Planetenradsätze RS1, RS2, RS3, RS4 sind als einfache Minus-Planetenradsätze ausgebildet und in diesem Ausführungsbeispiel in axialer Richtung in der Reihenfolge "RS1, RS3, RS2, RS4" koaxial hintereinander angeordnet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit H01, H02, H03 und H04 bezeichnet, die Sonnenräder mit SO1, S02, S03 und S04, die Planetenräder mit PL1, PL2, PL3 und PL4, und die Stege, an denen die genannten Planetenräder rotierbar gelagert sind, mit ST1, ST2, ST3 und ST4. Die Schaltelemente A und B sind als Bremsen ausgebildet, die im dargestellten Ausführungsbeispiel beide als reibschlüssig schaltbare Lamellenbremse ausgeführt sind, selbstverständlich in einer anderen Ausgestaltung auch als reibschlüssig schaltbare Bandbremse oder beispielsweise auch als formschlüssig schaltbare Klauen- oder Konusbremse ausgeführt sein können. Die Schaltelemente C, D und E sind als Kupplungen ausgebildet, die im dargestellten Ausführungsbeispiel alle als reibschlüssig schaltbare Lamellenkupplung ausgeführt sind, selbstverständlich in einer anderen Ausgestaltung beispielsweise auch als formschlüssig schaltbare Klauen- oder Konuskupplung ausgeführt sein können.

Mit diesen fünf Schaltelementen A bis E ist ein selektives Schalten von acht Vorwärtsgängen und zumindest einem Rückwärtsgang realisierbar. Das erfindungsgemäße Mehrstufengetriebe weist insgesamt zumindest acht drehbare Wellen auf, die mit 1 bis 8 bezeichnet sind.

Hinsichtlich der Kopplung der einzelnen Elemente der vier Planetenradsätze RS1, RS2, RS3, RS4 untereinander und zur Antriebs- und Abtriebswelle AN, AB ist bei dem Mehrstufengetriebe gemäß Figur 1 folgendes vorgesehen: Das Hohlrad HO1 des ersten Planetenradsatzes RS1 und die Antriebswelle AN sind verdrehfest miteinander verbunden und bilden die erste Welle 1 des Getriebes. Der Steg ST4 des vierten Planetenradsatzes RS4 und die Abtriebswelle AB sind verdrehfest miteinander verbunden und bilden die zweite Welle 2 des Getriebes. Die Sonnenräder S02, SO3 des zweiten und dritten Planetenradsatzes RS2, RS3 sind verdrehfest miteinander verbunden und bilden die dritte Welle 3 des Getriebes. Das Hohlrad H02 des zweiten Planetenradsatzes RS2 bildet die vierte Welle 4 und das Hohlrad H03 des dritten Planetenradsatzes RS3 die fünfte Welle 5 des Getriebes. Der Steg ST2 des zweiten Planetenradsatzes RS2 und das Hohlrad H04 des vierten Planetenradsatzes RS4 sind verdrehfest miteinander verbunden und bilden die sechste Welle 6 des Getriebes. Die Sonnenräder SO1, S04 des ersten und vierten Planetenradsatzes RS1, RS4 sind verdrehfest miteinander verbunden und bilden die siebte Welle 7 des Getriebes. Die Stege ST1, ST3 des ersten und dritten Planetenradsatzes RS1, RS3 sind verdrehfest miteinander verbunden und bilden die achte Welle 8 des Getriebes.

Hinsichtlich der Kopplung der fünf Schaltelemente A bis E an die so beschriebenen Wellen 1 bis 8 des Getriebes ist bei dem Mehrstufengetriebe gemäß Figur 1 folgendes vorgesehen: Das erste Schaltelement A ist im Kraftfluss zwischen der dritten Welle 3 und dem Gehäuse GG des Getriebes angeordnet. Das zweite Schaltelement B ist im Kraftfluss zwischen der vierten Welle 4 und dem Gehäuse GG des Getriebes angeordnet. Das dritte Schaltelement C ist im Kraftfluss zwischen der ersten und siebten Welle 1, 7 angeordnet. Das vierte Schaltelement D ist im Kraftfluss zwischen der fünften und sechsten Welle 5, 6 angeordnet. Das fünfte Schaltelement E ist im Kraftfluss zwischen der fünften und siebten Welle 5, 7 angeordnet ist. Durch Schließen der Kupplung C werden also Hohlrad HO1 und Sonnenrad SO1 des ersten Planetenradsatzes RS1 miteinander verbunden, mit der Folge, dass dieser Planetenradsatz RS1 dann als Block mit Antriebswellendrehzahl umläuft, also sowohl das Sonnenrad SO1 bzw. die Welle 7 als auch der Steg ST1 bzw. die Welle 8 mit Antriebswellendrehzahl rotieren.

In dem in Figur 1 dargestellten Ausführungsbeispiel ist der erste Planetenradsatz RS1 der antriebsnahe Radsatz des Getriebes und der vierte Planetenradsatz RS4 der abtriebsnahe Radsatz des Getriebes, wobei Antriebswelle AN und Abtriebswelle AB beispielhaft koaxial zueinander angeordnet sind. Dem Fachmann ist leicht ersichtlich, dass sich dieses Getriebe ohne besonderen Aufwand derart modifizieren, dass Antriebs- und Abtriebswelle nicht mehr koaxial zueinander angeordnet sind, beispielsweise achsparallel oder winklig zueinander. Bei einer derartigen Anordnung wird der Fachmann bei Bedarf auch den Antrieb des Getriebes nahe dem vierten Planetenradsatz RS4, also auf der dem zweiten Planetenradsatz RS1 abgewandten Seite des vierten Planetenradsatzes RS4 anordnen.

Entsprechend der räumlichen Anordnung der vier Radsätze in axialer Richtung gesehenen in der Folge "RS1, RS3, RS2, RS4" verläuft die siebte Welle 7 des Getriebes abschnittsweise zentrisch innerhalb der sechsten Welle 6 und. Dabei verläuft diese sechste Welle 6 abschnittsweise zentrisch innerhalb der dritten Welle 3. Weiterhin umgreift die achte Welle 8 die Kupplungen E und D und den dritten Planetenradsatz RS3 in axialer Richtung vollständig. Die erste Welle 1 des Getriebes übergreift die Kupplung C in axialer und radialer Richtung vollständig. Die Kupplungen D und E sind also innerhalb eines Zylinderraums angeordnet, der durch die Welle 8 gebildet wird, die Kupplung C innerhalb eines Zylinderraums, der durch die Welle 1 gebildet wird.

Wie als Figur 1 weiterhin ersichtlich, sind die beiden Bremsen A, B im dargestellten Ausführungsbeispiel räumlich gesehen axial unmittelbar nebeneinander in einem Bereich radial oberhalb der Planetenradsätze RS2 und RS3 angeordnet, wobei die Bremse B zumindest teilweise radial über dem zweiten Planetenradsatz RS2 angeordnet ist, und wobei die Bremse A zumindest teilweise in einem Bereich axial zwischen den beiden Planetenradsätzen RS2 und RS3 angeordnet ist. Die kinematische Anbindung der beiden Bremsen A, B an die beiden Planetenradsätzen RS2 und RS3 bedingt in diesem Anordungsbeispiel, dass die Bremse A näher am ersten Planetenradsatz RS1 bzw. näher am Antrieb des Getriebes angeordnet ist als die Bremse B. Selbstverständlich ist die in Figur 1 dargestellte räumliche Anordnung der beiden Bremsen A, B als beispielhaft zu verstehen. So kann die Bremse A beispielsweise auch zumindest teilweise radial über dem dritten Planetenradsatz RS3 angeordnet sein. Je nach dem zur Verfügung stehenden Bauraum für das Getriebegehäuse GG im Fahrzeug kann in einer anderen Ausgestaltung beispielsweise auch vorgesehen sein, dass die beiden Bremsen A, B - ausgehend von der Darstellung in Figur 1 - axial verschoben nebeneinander in einem Bereich radial über den Planetenradsätzen RS2 und RS4 oder nebeneinander radial über den Planetenradsätzen RS1 und RS3 angeordnet sind.

Wie als Figur 1 weiterhin ersichtlich, ist die Kupplung C, über welche die Antriebswelle AN bzw. die Welle 1 mit der Welle 7 verbindbar ist, räumlich gesehen auf der dem dritten Planetenradsatz RS3 abgewandten Seite des ersten Planetenradsatzes RS1 angeordnet, also auf der dem Antriebsmotor des Getriebes zugewandten Seite des Getriebes, innerhalb eines Zylinderraums, der durch die Welle 1 gebildet wird. Im dargestellten Beispiel ist dabei der Außenlamellenträger der Kupplung C mit der Antriebswelle AN bzw. der Welle 1 verdrehfest verbunden. Eine in Fig. 1 zur Vereinfachung nicht näher dargestellte, vorzugsweise auch einen dynamischen Druckausgleich aufweisende Servoeinrichtung der Kupplung C kann in günstiger Weise an diesem Außenlamellenträger axial verschiebbar gelagert sein und rotiert in diesem Fall stets mit Antriebswellendrehzahl. Eine Druck- und Schmiermittelversorgung der Kupplung C kann in konstruktiv einfacher Weise beispielsweise über Zentralbohrungen der Antriebswelle AN und/oder der Welle 7 aus erfolgen.

Wie aus Figur 1 weiterhin ersichtlich, sind die beiden Kupplungen D und E räumlich gesehen in einem Bereich axial zwischen den beiden Planetenradsätzen RS1 und RS3 angeordnet, wobei die Kupplung D hier beispielhaft näher am Planetenradsatz RS3 angeordnet ist als die Kupplung E und unmittelbar axial an diesen Planetenradsatz RS3 angrenzt. Im dargestellten Beispiel sind die Außenlamellenträger beider Kupplungen D, E mit der Welle 5 verbunden und können konstruktiv in einfacher Weise als gemeinsamer Lamellenträger ausgeführt sein, der dann mit dem Hohlrad H03 des dritten Planetenradsatzes RS3 verdrehfest verbunden ist. Vorzugsweise nimmt dieser gemeinsame Lamellenträger dabei auch die (in Figur 1 zur Vereinfachung nicht näher dargestellte) Servoeinrichtungen der beiden Kupplungen D, E axial verschiebbar auf, die dann beide stets mit Drehzahl der Welle 5 - d.h. mit Drehzahl des Hohlrades HO3 - rotieren und zweckmäßigerweise beide einen dynamischen Druckausgleich aufweisen. Selbstverständlich können die Lamellenpakete der beiden Kupplungen D, E entgegen der Darstellung in Figur 1 auch axial nebeneinander angeordnet sein.

Entgegen der Darstellung in Figur 1 kann für die beiden Kupplungen D, und E beispielsweise aber auch ein gemeinsamer Lamellenträger vorgesehen sein, der mit der Welle 5 verbunden und für die Kupplung E als Innenlamellenträger und für die Kupplung D als Außenlamellenträger ausgebildet ist, wobei in diesem Fall das Lamellenpaket der Kupplung E räumlich gesehen zumindest teilweise über dem Lamellenpaket der Kupplung D angeordnet ist. Entgegen der Darstellung in Figur 1 kann für die beiden Kupplungen D, E beispielsweise aber auch ein gemeinsamer Lamellenträger vorgesehen sein, der mit der Welle 5 verbunden und für die Kupplung D als Innenlamellenträger und für die Kupplung E als Außenlamellenträger ausgebildet ist, wobei in diesem Fall das Lamellenpaket der Kupplung D räumlich gesehen zumindest teilweise über dem Lamellenpaket der Kupplung E angeordnet ist. Entgegen der Darstellung in Figur 1 kann beispielsweise auch vorgesehen sein, dass das Lamellenpaket der Kupplung D räumlich gesehen zumindest teilweise in einem Bereich radial über dem dritten Planetenradsatz RS3 angeordnet ist, wobei das Lamellenpaket der Kupplung E dann - wie in Figur 1 - immer noch näher am ersten Planetenradsatz RS1 angeordnet ist als das Lamellenpaket der Kupplung D. Entgegen der Darstellung in Figur 1 kann beispielsweise aber auch vorgesehen sein, dass das Lamellenpaket der Kupplung E räumlich gesehen zumindest teilweise in einem Bereich radial über dem dritten Planetenradsatz RS3 angeordnet ist, wobei in diesem Fall dann das Lamellenpaket der Kupplung D - im Unterschied zu Figur 1 - näher am ersten Planetenradsatz RS1 angeordnet ist als das Lamellenpaket der Kupplung D, und wobei in diesem Fall die Welle 5 zweckmäßigerweise für beide Kupplungen D, E als Innenlamellenträger ausgebildet ist.

Figur 2 zeigt ein zweites Ausführungsbeispiel einer erfindungsgemäßen Mehrstufengetriebes, basierend auf dem zuvor anhand Figur 1 im Detail erläuterten ersten Ausführungsbeispiel. Wie aus Figur 2 leicht ersichtlich, ist die kinematische Kopplung der vier Planetenradsätze RS1, RS2, RS3, RS4 untereinander und zu den vier Schaltelemente A, B, D, E und zur Antriebs- und Abtriebswelle AN, AB vollkommen identisch zu Figur 1, wohingegen die kinematische Anbindung der Kupplung C unterschiedlich zu Figur 1 ist. Wie aus Figur 2 ersichtlich, ist die Antriebswelle AN bzw. die Welle 1 des Getriebes über die Kupplung C nunmehr mit der Welle 8 des Getriebes verbindbar.

Durch Schließen der Kupplung C werden also nunmehr Hohlrad H01 und Steg ST1 des ersten Planetenradsatzes RS1 miteinander verbunden. Wie in Figur 1 läuft der Planetenradsatz RS1 als Block mit Antriebswellendrehzahl um, wenn die Kupplung C geschlossen ist. Wie in Figur 1 rotieren also sowohl das Sonnenrad SO1 bzw. die Welle 7 als auch der Steg ST1 bzw. die Welle 8 mit Antriebswellendrehzahl, wenn die Kupplung C geschlossen ist.

Entsprechend der kinematischen Anbindung der Kupplung C an die Wellen 1 und 8 ist auch die räumliche Anordnung der Kupplung C in Figur 2 gegenüber Figur 1 verändert. Wie als Figur 2 ersichtlich, ist zumindest das Lamellenpaket der Kupplung C räumlich gesehen nunmehr axial zwischen dem ersten Planetenradsatz RS1 und dem dritten Planetenradsatz RS3 angeordnet, dabei axial unmittelbar angrenzend an den ersten Planetenradsatz RS1, hier beispielhaft auf einem Durchmesser größer dem Hohlrad H01. Das mit der Welle 1 verbundene Element der Kupplung C ist beispielhaft als Außenlamellenträger ausgebildet. Eine (in Figur 2 zur Vereinfachung nicht näher dargestellte) Servoeinrichtung der Kupplung C zur Betätigung deren Lamellenpaketes kann beispielsweise überwiegend auf der dem ersten Planetenradsatz RS1 abgewandten Seite der Welle 1 angeordnet und an der Antriebswelle AN bzw. der Welle 1 axial verschiebbar gelagert sein und stets mit Antriebswellendrehzahl rotieren, wobei dann ein auf das Lamellenpaket der Kupplung C wirkendes Betätigungselement dieser Servoeinrichtung den ersten Planetenradsatz RS1 und das Lamellenpaket der Kupplung C in axialer und radialer Richtung umgreift und von der dem dritten Planetenradsatz RS3 zugewandten Seite des Lamellenpaketes der Kupplung C auf dieses ihm zugeordnete Lamellenpaket her wirkt.

In einer anderen Ausgestaltung der Kupplung C kann aber auch vorgesehen sein, dass ihr Innenlamellenträger mit der Welle 1 und ihr Außenlamellenträger mit der Welle 8 verbunden ist. In diesem Fall ist die (in Figur 2 zur Vereinfachung nicht näher dargestellte) Servoeinrichtung der Kupplung C zweckmäßigerweise zumindest überwiegend räumlich gesehen zumindest weitgehend auf der dem ersten Planetenradsatz RS1 abgewandten Seite des ihm zugeordneten Lamellenpaketes der Kupplung C innerhalb eines durch die Welle 8 gebildeten Zylinderraums angeordnet, an dieser Welle 8 axial verschiebbar gelagert und rotiert entsprechend stets mit Drehzahl dieser Welle 8.

Wie aus Figur 2 weiterhin ersichtlich, ist die räumliche Anordnung der Getriebebauelemente relativ zueinander bis auf die räumliche Lage der Kupplung C unverändert aus Figur 1 übernommen. Dabei sind die Anordnungsdetails gemäß Figur 2 vergleichbar zu Figur 1 als beispielhaft anzusehen. Der Fachmann wird also alle anhand Figur 1 erläuterten Überlegungen zur räumlichen Anordnung der Getriebebauelemente innerhalb des Getriebegehäuses GG bei Bedarf auch auf das Radsatzschema gemäß Figur 2 sinngemäß übertragen.

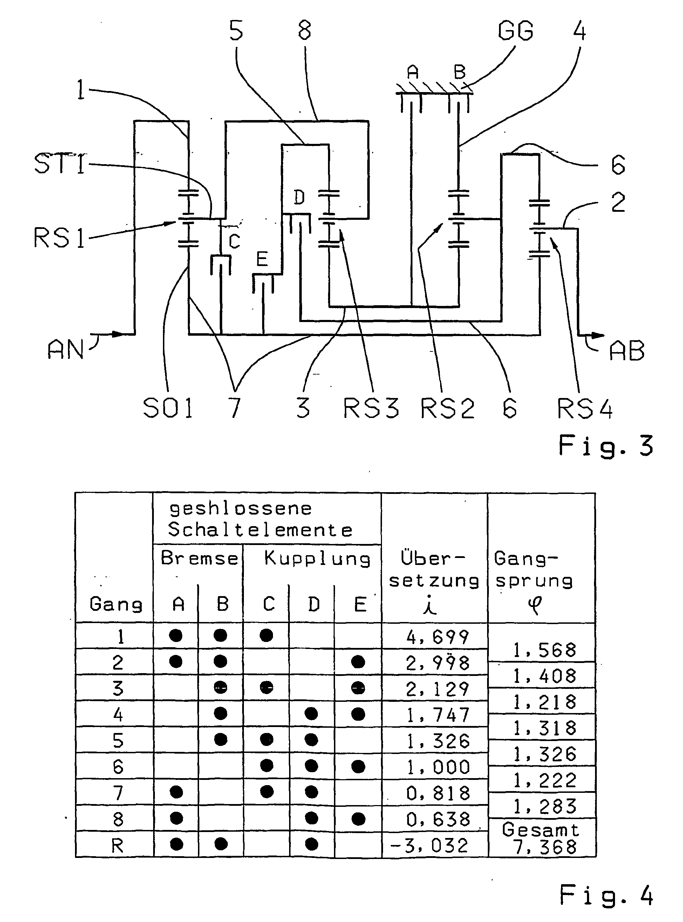

Figur 3 zeigt ein drittes Ausführungsbeispiel einer erfindungsgemäßen Mehrstufengetriebes, wiederum basierend auf dem zuvor anhand Figur 1 im Detail erläuterten ersten Ausführungsbeispiel. Wie aus Figur 3 leicht ersichtlich, ist die kinematische Kopplung der vier Planetenradsätze RS1, RS2, RS3 und RS4 untereinander und zu den vier Schaltelemente A, B, D, E und zur Antriebs- und Abtriebswelle AN, AB vollkommen identisch zu Figur 1, wohingegen die kinematische Anbindung der Kupplung C unterschiedlich zu Figur 1 ist. Wie aus Figur 3 ersichtlich, sind nunmehr die Wellen 7 und 8 des Getriebes über die Kupplung C miteinander verbindbar.

Durch Schließen der Kupplung C werden also nunmehr Sonnenrad SO1 und Steg ST1 des ersten Planetenradsatzes RS1 miteinander verbunden. Wie in Figur 1 läuft der Planetenradsatz RS1 als Block mit Antriebswellendrehzahl um, wenn die Kupplung C geschlossen ist. Wie in Figur 1 rotieren also sowohl das Sonnenrad SO1 bzw. die Welle 7 als auch der Steg ST1 bzw. die Welle 8 mit Antriebswellendrehzahl, wenn die Kupplung C geschlossen ist.

Wie aus Figur 3 weiterhin ersichtlich, ist die räumliche Anordnung der Getriebebauelemente relativ zueinander bis auf die räumliche Lage der Kupplung C unverändert aus Figur 1 übernommen. Dabei sind die Anordnungsdetails gemäß Figur vergleichbar zu Figur 1 als beispielhaft anzusehen. Der Fachmann wird also alle anhand Figur 1 erläuterten Überlegungen zur räumlichen Anordnung der Getriebebauelemente innerhalb des Getriebegehäuses GG bei Bedarf auch auf das Radsatzschema gemäß Figur 3 sinngemäß übertragen.

Entsprechend der kinematischen Anbindung der Kupplung C an die Wellen 1 und 8 ist auch die räumliche Anordnung der Kupplung C in Figur 3 gegenüber Figur 1 verändert. Wie aus Figur 2 ersichtlich, ist die Kupplung C räumlich gesehen nunmehr axial zwischen dem ersten Planetenradsatz RS1 und dem dritten Planetenradsatz RS3 bzw. axial zwischen dem ersten Planetenradsatz RS1 und der Kupplung E angeordnet. Dabei grenzt die Kupplung C axial unmittelbar an den ersten Planetenradsatz RS1 an, hier beispielhaft in einem Bereich radial unterhalb des Stegs ST1 dieses Planetenradsatzes RS1. Das mit diesem Steg ST1 verdrehfest verbundene Element der Kupplung C ist im dargestellten Ausführungsbeispiel als Außenlamellenträger ausgebildet, kann selbstverständlich aber auch als Innenlamellenträger ausgebildet sein. Eine zur Vereinfachung in Figur 3 nicht näher dargestellte Servoeinrichtung der Kupplung C zur Betätigung deren Lamellenpaket kann in konstruktiv einfacher Weise auf der dem ersten Planetenradsatz RS1 zugewandten oder auf der dem ersten Planetenradsatz RS1 abgewandten Seite des Lamellenpaketes der Kupplung C angeordnet sein.

Zur Einsparung von axialer Baulänge kann entgegen der Darstellung in Figur 3 das Lamellenpaket der Kupplung C beispielsweise auch räumlich gesehen in einem Bereich radial über dem Lamellenpaket der Kupplung E oder in einem Bereich radial über dem Lamellenpaket der Kupplung D oder in einem Bereich radial über dem dritten Planetenradsatz RS3 angeordnet sein.

In Figur 4 ist ein beispielhaftes Schaltschema der erfindungsgemäßen Mehrstufengetrieb gemäß Figur 1, Figur 2 und Figur 3 dargestellt. In jedem-Gang sind drei Schaltelemente geschlossen und zwei Schaltelemente offen. Neben der Schaltlogik können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standgetriebeübersetzungen der vier Planetensätze RS1, RS2, RS3, RS4 von minus 1,55, minus 2,06, minus 3,54 und minus 3,70. Des weiteren kann dem Schaltschema entnommen werden, dass bei sequentieller Schaltweise Doppelschaltungen bzw. Gruppenschaltungen vermieden werden, da zwei in der Schaltlogik benachbarte Gangstufen zwei Schaltelemente gemeinsam benutzen. Der sechste Gang ist vorzugsweise als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schließen der Bremse B und der Kupplungen D und E, der fünfte Vorwärtsgang durch Schließen der Bremse B und der Kupplungen C und D, der sechste Vorwärtsgang durch Schließen der Kupplungen C, D und E, der siebte Vorwärtsgang durch Schließen der Bremse A und der Kupplungen C und D, sowie der achte Vorwärtsgang durch Schließen der Bremse A und der Kupplungen D und E. Wie aus dem Schaltschema weiter ersichtlich, ergibt sich der Rückwärtsgang durch Schließen der Bremsen A und B und der Kupplung D.

Gemäß der Erfindung ist ein Anfahren des Kraftfahrzeugs mit einem im Getriebe integrierten Schaltelement möglich. Hierbei ist ein Schaltelement besonders geeignet, das im ersten Vorwärtsgang und im Rückwärtsgang benötigt wird, hier also vorzugsweise die Bremse A oder die Bremse B. In vorteilhafter Weise werden beide Bremsen A und B auch im zweiten Vorwärtsgang benötigt. Wird die Bremse B als im Getriebe integriertes Anfahrelement genutzt, so ist damit sogar ein Anfahren in den ersten fünf Vorwärtsgängen und dem Rückwärtsgang möglich.

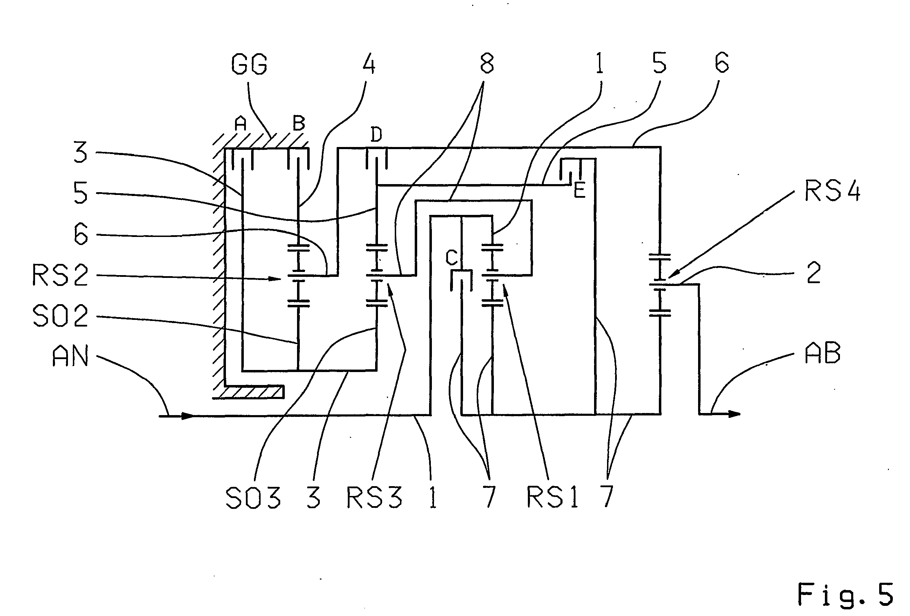

Die räumliche Anordnung der Schaltelemente des in den Figuren 1 bis 3 dargestellten Ausführungsbeispiels eines erfindungsgemäßen Mehrstufengetriebes innerhalb des Getriebes kann im Prinzip beliebig sein und wird nur durch die Abmessungen und die äußere Formgebung des Getriebegehäuses GG begrenzt. Entsprechend ist in Figur 5 beispielhaft eine Bauteilanordnungs-Variante des Mehrstufengetriebes gemäß Figur 1 dargestellt, wobei alle kinematischen Kopplungen der Radsatzelemente, Schaltelemente und Wellen untereinander unverändert aus Figur 1 übernommen sind.

Wie aus Figur 5 ersichtlich, sind die vier Planetenradsätze RS1 bis RS4 nunmehr in axialer Richtung in der Reihenfolge "RS21, RS3, RS1, RS4 koaxial hintereinander angeordnet. Antriebswelle AN und Abtriebswelle AB sind wie in Figur 1 beispielhaft koaxial zueinander angeordnet, sodass nunmehr der zweite Planetenradsatz RS2 der antriebsnahe Radsatz des Getriebes ist, wobei der vierte Planetenradsatz RS4 wie in Figur 1 der abtriebsnahe Radsatz des Getriebes ist. Selbstverständlich sind die im Rahmen der Beschreibung der Figur 1 getroffenen Aussagen hinsichtlich der Möglichkeiten, die relative räumliche Lage von Antriebs- und Abtriebswelle AN, AB bzw. von An- und Abtrieb des Getriebes auch auf das Ausführungsbeispiel gemäß Figur 5 sinngemäß übertragbar.

Entsprechend der räumlichen Anordnung der vier Radsätze in axialer Richtung gesehenen in der Folge "RS2, RS3, RS1, RS4" werden die vier Planetenradsätze RS1 bis RS4 jeweils höchstens von einer Welle zentrisch durchgriffen. Wie in Figur 5 ersichtlich, werden die beiden Planetenradsätze RS2, RS3 - in Verbindung mit der beispielhaften räumlichen Lage des Antriebs auf der dem dritten Planetenradsatz RS3 gegenüberliegenden Seite des zweiten Planetenradsatzes RS2 - lediglich von der Antriebswelle AN bzw. der Welle 1 des Getriebes in axialer Richtung zentrisch durchgriffen, die beiden anderen Planetenradsätze RS1 und RS4 von gar keiner Welle. Dies ist besonders vorteilhaft einerseits für die Dimensionierung der Antriebswelle AN und der Radsätze, andererseits auch für die vergleichsweise einfache Schmiermittelzuführung zu den Planetenrädern der vier Planetenradsätze RS1, RS2, RS3, RS4 und für die vergleichsweise einfache Druck- und Schmiermittelzuführung zu den drei Kupplungen E, D und C. So kann beispielsweise die Welle 3, die bekanntlich unter anderem die Verbindung der beiden Sonnenräder S02, S03 der beiden Planetenradsätze RS2, RS3 bildet, konstruktiv einfach auf der Antriebswelle AN oder auch an einer getriebegehäusefesten Nabe verdrehbar gelagert sein. Ist in einer anderen Ausgestaltung mit nicht koaxialer Antriebs- und Abtriebswelle der Antrieb des Getriebes abweichend zu Figur 5 auf der dem ersten Planetenradsatz RS1 gegenüberliegenden Seite des vierten Planetenradsatzes RS4 angeordnet, so werden in diesem Fall die beiden Planetenradsätze RS4 und RS1 von der Antriebswelle AN bzw. der Welle 1 in axialer Richtung zentrisch durchgriffen und die beiden anderen Planetenradsätze RS3 und RS2 von gar keiner Welle.

Entsprechend der gegenüber Figur 1 geänderten räumlichen Lage der vier Planetenradsätze RS1 bis RS4 relativ zueinander ergibt sich gemäß Figur 5 auch eine gegenüber Figur 1 geänderte zweckmäßige räumliche Anordnung der fünf Schaltelemente A bis E innerhalb des Getriebegehäuses GG relativ zu den Radsätzen.

Wie aus Figur 5 ersichtlich, ist die Bremse B - insbesondere das Lamellenpaket der Bremse B - räumlich gesehen in einem Bereich radial über dem zweiten Planetenradsatz RS2 angeordnet. Auf der dem dritten Planetenradsatz RS3 abgewandten Seite des zweiten Planetenradsatzes RS2 schließt sich die Bremse A axial an die Bremse B an, wobei in dem dargestellten Ausführungsbeispiel die Lamellenpakete dieser beiden Bremsen A, B auf einem zumindest ähnlichen Durchmesser angeordnet sind. Entsprechend der räumlichen Lage des zweiten Planetenradsatzes RS2 im Bereich einer radialen Außenwand des Getriebegehäuses GG sind also auch die beiden Bremsen A und B nahe dieser Getriebegehäusewand angeordnet, wobei die Bremse A in dem dargestellten Ausführungsbeispiel axial unmittelbar an diese Getriebegehäusewand angrenzt. Im dargestellten Ausführungsbeispiel ist die genannte Getriebegehäusewand die dem Antriebsmotor des Getriebes zugewandte Außenwand des Getriebes, entsprechend der beispielhaft koaxialen Anordnung von Antriebs- und Abtriebswelle AN, AB und der hierbei zweckmäßigen räumlichen Anordnung des Antriebs auf der Seite des Getriebegehäuses GG an der auch der zweite Planetenradsatz RS2 angeordnet ist. In einer anderen Ausgestaltung können die beiden Bremsen A, B im Unterschied zu der Darstellung in Figur 5 auch zumindest im wesentlichen radial übereinander im Bereich der genannten Gehäusewand angeordnet sein, wobei dann die Bremse B räumlich gesehen oberhalb der Bremse A angeordnet ist. In noch einer anderen Ausgestaltung können die beiden Bremsen A, B auch ausgehend von der Darstellung in Figur axial in Richtung Getriebemitte versetzt angeordnet sein, insbesondere derart, dass dann die Bremse A zumindest teilweise in einem Bereich radial über dem Planetenradsatz RS2 angeordnet ist und die Bremse B zumindest teilweise in einem Bereich radial über dem Planetenradsatz RS3. Die (zur Vereinfachung in Figur 5 nicht näher dargestellten) Servoeinrichtungen der Bremsen A, B zur Betätigung des jeweils zugeordneten Lamellenpaketes der Bremse A bzw. B können in konstruktiv einfacher Weise in das Getriebegehäuse und/oder die genannte (hier beispielhaft antriebsnahe) Getriebegehäusewand integriert sein.

Die Kupplung C, über welche die Antriebswelle AN bzw. die Welle 1 mit der Welle 7 verbindbar ist, ist räumlich gesehen axial zwischen dem ersten und dritten Planetenradsatz RS1, RS3 angeordnet, dabei axial unmittelbar angrenzend an den ersten Planetenradsatzes RS1. Im dargestellten Beispiel ist dabei der Außenlamellenträger der Kupplung C mit der Antriebswelle AN bzw. der Welle 1 des Getriebes verdrehfest verbunden. Die Kupplung C ist hier also innerhalb eines Zylinderraums angeordnet, der durch die Welle 1 gebildet wird. Eine (in Figur 5 zur Vereinfachung nicht näher dargestellte) Servoeinrichtung der Kupplung C kann in günstiger Weise an diesem Außenlamellenträger axial verschiebbar gelagert sein und rotiert in diesem Fall stets mit Antriebswellendrehzahl. Eine Druck- und Schmiermittelversorgung der Kupplung C kann in konstruktiv einfacher Weise beispielsweise über entsprechende Bohrungen bzw. Kanäle der Antriebswelle AN aus erfolgen. Abweichend von der Darstellung in Figur 5 kann aber auch vorgesehen sein, dass der Außenlamellenträger der Kupplung C mit der Welle 7 und der Innenlamellenträger der Kupplung C entsprechend mit der Welle 1 verbunden ist. In diesem Fall ist die Servoeinrichtung der Kupplung C dann zweckmäßigerweise an der Welle 7 axial verschiebbar gelagert und rotiert dann stets mit Drehzahl dieser Welle 7. Zweckmäßigerweise erfolgt in diesem Fall die Druckmittelversorgung der Kupplung C über entsprechende Bohrungen bzw. Kanäle der Welle 7.

Die mit der Welle 5 des Getriebes verbundene Kupplung E ist in dem in Figur 5 dargestellten Ausführungsbeispiel räumlich gesehen in einem Bereich axial zwischen den beiden Planetenradsätzen RS1 und RS4 angeordnet, wobei das mit der Welle 5 verdrehfest verbundene Element der Kupplung E beispielhaft als Innenlamellenträger ausgebildet ist und das mit der Welle 7 des Getriebes verbundene Element der Kupplung E entsprechend als Außenlamellenträger. Entsprechend ist es in diesem Fall zweckmäßig, dass die (in Figur 5 zur Vereinfachung nicht näher dargestellte) Servoeinrichtung zur Betätigung des Lamellenpaket der Kupplung E an der Welle 7 axial verschiebbar gelagert ist und stets mit Drehzahl dieser Welle 7 rotiert. Vorzugsweise grenzt die Servoeinrichtung der Kupplung E dabei axial an den ersten Planetenradsatz RS1 an. Zur Einsparung von axialer Baulänge kann das Lamellenpaket der Kupplung E entgegen der Darstellung in Figur 5 räumlich gesehen beispielsweise auch zumindest teilweise in einem Bereich radial über dem ersten Planetenradsatz RS1 angeordnet sein, wobei die Servoeinrichtung der Kupplung E dann immer noch überwiegend axial an den Planetenradsatz RS1 angrenzt.

Wie aus Figur 5 weiterhin ersichtlich, ist das Lamellenpaket der Kupplung D räumlich gesehen in einem Bereich radial über dem dritten Planetenradsatz RS3 angeordnet, wobei der Innenlamellenträger dieser Kupplung D hier beispielhaft mit der Welle 5 des Getriebes und der Außenlamellenträger der Kupplung D entsprechend mit der Welle 6 des Getriebes verdrehfest verbunden ist. Entsprechend ist es in diesem Fall zweckmäßig, dass die (in Figur 5 zur Vereinfachung nicht näher dargestellte) Servoeinrichtung zur Betätigung des Lamellenpaket der Kupplung D an der Welle 6 axial verschiebbar gelagert ist und stets mit Drehzahl dieser Welle 6 rotiert. Dabei kann die Servoeinrichtung der Kupplung D - je nach Erfordernis - entweder auf der dem zweiten Planetenradsatz RS2 zugewandten Seite des ihr zugeordneten Lamellenpaketes oder aber auf der dem vierten Planetenradsatz RS4 zugewandten Seite des ihr zugeordneten Lamellenpaketes angeordnet sein. Im ersten Fall ist die Servoeinrichtung der Kupplung D also zumindest überwiegend in einem Bereich axial zwischen den Planetenradsätzen RS2 und RS3 angeordnet und kann über entsprechende Bohrungen bzw. Kanäle der Antriebswelle AN und der (Sonnen-)Welle 3 mit Druck- und Schmiermittel versorgt werden. Im zweiten Fall ist die Servoeinrichtung der Kupplung D zumindest überwiegend in einem Bereich axial zwischen dem den Außenlamellenträger der Kupplung E bildenden radialen Abschnitt der Welle 7 und dem Planetenradsatz RS4 angeordnet und kann in konstruktive einfacher Weise über entsprechende Bohrungen bzw. Kanäle der (Sonnen-)Welle 7 mit Druck- und Schmiermittel versorgt werden, wobei ein auf das Lamellenpaket der Kupplung E wirkendes Betätigungselement dieser Servoeinrichtung die Kupplung E und den ersten Planetenradsatz RS1 in axialer Richtung radial übergreift.

Aus der räumlichen Anordnung der vier Radsätze in axialer Richtung gesehenen in der Folge "RS2, RS3, RS1, RS4" ergibt sich also, dass die Welle 5 des Getriebes radial innerhalb des Zylinderraums der Welle 6 des Getriebes verläuft, dass die Welle 8 des Getriebes zumindest weitgehend radial innerhalb des Zylinderraum dieser Welle 5 verläuft, und dass ein Abschnitt der Welle 1 des Getriebes radial innerhalb des Zylinderraums dieser Welle 8 verläuft. Auch die Welle 7 des Getriebes verläuft überwiegend radial innerhalb des Zylinderraums der Welle 6. Ein zylindrischer Abschnitt der Welle 1 übergreift also die Kupplung C in axialer radial, die Welle 8 umgreift also die Kupplung C und den ersten Planetenradsatz RS1 in axialer und radialer Richtung, die Welle 5 übergreift also ebenfalls zumindest weitgehend die Kupplung C und den ersten Planetenradsatz RS1 in axialer Richtung radial, und die Welle 6 schließlich übergreift die Kupplung C und den ersten Planetenradsatz RS1 und die Kupplung E in axialer Richtung radial.

Selbstverständlich wird der Fachmann die anhand Figur 5 beschriebene Bauteilanordnungs-Variante, die auf dem Radsatzschema bzw. der kinematischen Bauteilkopplung des Mehrstufengetriebes gemäß Figur 1 basiert, sinngemäß auch auf die anderen erfindungsgemäßen Radsatzschemata gemäß Figur 2 und Figur 3 übertragen. In Verbindung mit dem Radsatzschema bzw. der kinematischen Bauteilkopplung gemäß Figur 2 würde die Bremse C - die in diesem Fall eine schaltbare Verbindung zwischen der ersten und achten Welle 1, 8 des Getriebes bildet - dann im Unterschied zu Figur 5 unmittelbar an den dritten Planetenradsatz RS3 angrenzen. In Verbindung mit dem Radsatzschema bzw. der kinematischen Bauteilkopplung gemäß Figur 3 würde die Bremse C - die in diesem Fall eine schaltbare Verbindung zwischen der siebten und achten Welle 7, 8 des Getriebes bildet - dann im Unterschied zu Figur 5 auf der Seite des ersten Planetenradsatzes RS1 angeordnet sein, die dem vierten Planetenradsatz RS4 zugewandt ist, zweckmäßigerweise dabei unmittelbar angrenzend an den ersten Planetenradsatz RS1.

Für alle zuvor dargestellten bzw. beschriebenen Ausführungsbeispiele der Getriebefamilie gemäß der Erfindung gilt zudem folgendes:

Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle AN durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle AN oder der Abtriebswelle AB, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden. Insbesondere für die Bremse B bietet sich die Verwendung einer baulängensparende Bandbremse an, da diese Bremse B entsprechend der Schaltlogik des Getriebes nur beim Einlegen des Rückwärtsgangs aus Neutralstellung heraus und nur bei der Rückschaltung in den fünften Vorwärtsgang zugeschaltet werden muß.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegende Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle 2 zweite Welle
- 3: dritte Welle
- 4: vierte Welle
- 5: fünfte Welle
- 6: sechste Welle
- 7: siebte Welle
- 8: achte Welle

- A: erstes Schaltelement, erste Bremse
- B: zweites Schaltelement, zweite Bremse
- C: drittes Schaltelement, erste Kupplung
- D: viertes Schaltelement, zweite Kupplung
- E: fünftes Schaltelement, dritte Kupplung

- AN: Antriebswelle
- AB: Abtriebswelle
- GG: Gehäuse

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzes

- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenräder des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenräder des dritten Planetenradsatzes

- RS4: vierter Planetenradsatz
- HO4: Hohlrad des vierten Planetenradsatzes
- SO4: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (AN) und eine Abtriebswelle (AB), vier Planetenradsätze (RS1, RS2, RS3, RS4), mindestens acht drehbare Wellen (1, 2, 3, 4, 5, 6, 7, 8) sowie fünf Schaltelemente (A, B, C, D, E), deren selektives Eingreifen verschiedene Übersetzungsverhältnisse zwischen der Antriebswelle (AN) und der Abtriebswelle (AB) bewirkt, so dass acht Vorwärtsgänge und zumindest ein Rückwärtsgang realisierbar sind, wobei
■ ein Hohlrad (HO1) des ersten Planetenradsatzes (RS1) und die Antriebswelle (AN) verdrehfest miteinander verbunden sind und die erste Welle (1) bilden,
■ ein Steg (ST4) des vierten Planetenradsatzes (RS4) und die Abtriebswelle (AB) verdrehfest miteinander verbunden sind und die zweite Welle (2) bilden,
■ ein Sonnenrad (S02) des zweiten Planetenradsatzes (RS2) und ein Sonnenrad (SO3) des dritten Planetenradsatzes (RS3) verdrehfest miteinander verbunden sind und die dritte Welle (3) bilden,
■ ein Hohlrad (HO2) des zweiten Planetenradsatzes (RS2) die vierte Welle (4) bildet,
■ ein Hohlrad (HO3) des dritten Planetenradsatzes (RS3) die fünfte Welle (5) bildet,
■ ein Steg (ST2) des zweiten Planetenradsatzes (RS2) und ein Hohlrad (H04) des vierten Planetenradsatzes (RS4) verdrehfest miteinander verbunden sind und die sechste Welle (6) bilden,
■ ein Sonnenrad (SO1) des ersten Planetenradsatzes (RS1) und ein Sonnenrad (S04) des vierten Planetenradsatzes (RS4) verdrehfest miteinander verbunden sind und die siebte Welle (7) bilden und
■ ein Steg (ST1) des ersten Planetenradsatzes (RS1) und ein Steg (ST3) des dritten Planetenradsatzes (RS3) verdrehfest miteinander verbunden sind und die achte Welle (8) bilden,
und wobei
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss entweder zwischen der ersten und siebten Welle (1, 7) oder zwischen der ersten und achten Welle (1, 8) oder zwischen der siebten und achten Welle (7, 8) angeordnet ist,
■ das vierte Schaltelement (D) im Kraftfluss zwischen der fünften und sechsten Welle (5, 6) angeordnet ist, und
■ das fünfte Schaltelement (E) im Kraftfluss zwischen der fünften und siebten Welle (5, 7) angeordnet ist.

2. Mehrstufengetriebe nach Anspruch 1, **dadurch gekennzeichnet dass** sich
■ der erste Vorwärtsgang durch Schließen des ersten, zweiten und dritten Schaltelementes (A, B, C),
■ der zweite Vorwärtsgang durch Schließen des ersten, zweiten und fünften Schaltelementes (A, B, E),
■ der dritte Vorwärtsgang durch Schließen des zweiten, dritten und fünften Schaltelementes (B, C, E),
■ der vierte Vorwärtsgang durch Schließen des zweiten, vierten und fünften Schaltelementes (B, D, E),
■ der fünfte Vorwärtsgang durch Schließen des zweiten, dritten und vierten Schaltelementes (B, C, D),
■ der sechste Vorwärtsgang durch Schließen des dritten, vierten und fünften Schaltelementes (C, D, E),
■ der siebte Vorwärtsgang durch Schließen des ersten, dritten und vierten Schaltelementes (A; C, D) und
■ der achte Vorwärtsgang durch Schließen des ersten, vierten und fünften Schaltelementes (A, D, E)
ergibt

3. Mehrstufengetriebe nach Anspruch 1 oder 2, **dadurch gekennzeichnet, dass** sich ein Rückwärtsgang durch Schließen des ersten, zweiten und vierten Schaltelementes (A, B, D) ergibt

4. Mehrstufengetriebe nach Anspruch 1, 2 oder 3, **dadurch gekennzeichnet, dass** alle vier Planetenradsätze (RS1, RS2, RS3, RS4) als Minus-Planetenradsätze ausgebildet sind.

5. Mehrstufengetriebe nach einem der Ansprüche 1 bis 4, **dadurch gekennzeichnet, dass** die Planetenradsätze (RS1, RS2, RS3, RS4) koaxial zueinander und in axialer Richtung hintereinander in einer Reihenfolge "RS1, RS3, RS2, RS4" angeordnet sind

6. Mehrstufengetriebe nach Anspruch 5, **dadurch gekennzeichnet, dass**
■ die siebte Welle (7) abschnittsweise zentrisch innerhalb der sechsten Welle (6) verläuft,
■ die sechste Welle (6) abschnittsweise zentrisch innerhalb der dritten Welle (3) verläuft, und
■ die achte Welle (8) die fünfte Welle (5), das vierte und fünfte Schaltelement (D, E) und den dritten Planetenradsatz (RS3) in axialer Richtung vollständig umgreift.

7. Mehrstufengetriebe nach einem der vorstehenden Ansprüche, **dadurch gekennzeichnet, dass** das erste und zweite Schaltelement (A, B) räumlich gesehen axial unmittelbar nebeneinander in einem Bereich radial oberhalb der Planetenradsätze (RS1 bis RS4) angeordnet sind

8. Mehrstufengetriebe nach einem der vorstehenden Ansprüche, **dadurch gekennzeichnet, dass** das zweite Schaltelement (B) räumlich gesehen zumindest teilweise radial über dem zweiten Planetenradsatz (RS2) angeordnet ist, und dass das erste Schaltelement (A) zumindest teilweise in einem Bereich axial zwischen dem zweiten und dritten Planetenradsatz (RS2, RS3) und/oder zumindest teilweise in einem Bereich radial über dem dritten Planetenradsatz (RS3) angeordnet ist.

9. Mehrstufengetriebe nach einem der vorstehenden Ansprüche, **dadurch gekennzeichnet, dass** das vierte und fünfte Schaltelement (D, E) räumlich gesehen zumindest teilweise axial zwischen dem ersten und dritten Planetenradsatz (RS1, RS3) angeordnet sind

10. Mehrstufengetriebe nach einem der Ansprüche 1 bis 9, **dadurch gekennzeichnet, dass** die erste Welle (1) das dritte Schaltelement (C) in axialer und radialer Richtung vollständig übergreift.

11. Mehrstufengetriebe nach einem der Ansprüche 1 bis 10, **dadurch gekennzeichnet, dass** das dritte Schaltelement (C) räumlich gesehen auf der dem dritten Planetenradsatz (RS3) gegenüberliegenden Seite des ersten Planetenradsatzes (RS1) angeordnet ist

12. Mehrstufengetriebe nach einem der Ansprüche 1 bis 9, **dadurch gekennzeichnet, dass** die achte Welle (8) das dritte Schaltelement (C) in axialer und radialer Richtung vollständig übergreift.

13. Mehrstufengetriebe nach einem der Ansprüche 1 bis 4, **dadurch gekennzeichnet, dass** die Planetenradsätze (RS1, RS2, RS3, RS4) koaxial zueinander und in axialer Richtung hintereinander in einer Reihenfolge "RS2, RS3, RS1, RS4" angeordnet sind.

14. Mehrstufengetriebe nach einem der Ansprüche 1 bis 4 oder 13, **dadurch gekennzeichnet, dass** die vier Planetenradsätze (RS1, RS2, RS3, RS4) jeweils höchstens von einer Welle (AN bzw. 1) des Getriebes in axialer Richtung zentrisch durchgriffen werden.

15. Mehrstufengetriebe nach einem der Ansprüche 1 bis 4, 13 oder 14, **dadurch gekennzeichnet, dass** die Antriebswelle (AN) bzw. die erste Welle (1) des Getriebes den zweiten und dritten Planetenradsatz (RS2, RS3) in axialer Richtung zentrisch durchgreift.

16. Mehrstufengetriebe nach einem der Ansprüche 1 bis 4, 13 oder 14, **dadurch gekennzeichnet, dass** die Antriebswelle (AN) bzw. die erste Welle (1) des Getriebes den vierten und ersten Planetenradsatz (RS4, RS1) in axialer Richtung zentrisch durchgreift.

17. Mehrstufengetriebe nach einem der Ansprüche 1 bis 4 oder 13 bis 16, **dadurch gekennzeichnet, dass**
■ die achte Welle (8) das dritte Schaltelement (C) und den ersten Planetenradsatz (RS1) in axialer und radialer Richtung vollständig übergreift,
■ die fünfte Welle (5) die achte Welle (8) in axialer und radialer Richtung vollständig übergreift, und
■ die sechste Welle (6) den dritten Planetenradsatz (RS3), die fünfte Welle (5) und das fünfte Schaltelement (E) in axialer und radialer Richtung vollständig übergreift

18. Mehrstufengetriebe nach einem der Ansprüche 1 bis 4 oder 13 bis 17, **dadurch gekennzeichnet, dass** die dritte Welle (3) an der Antriebswelle (AN) oder an einer gehäusefesten Nabe verdrehbar gelagert ist.

19. Mehrstufengetriebe nach einem der Ansprüche 1 bis 4 oder 13 bis 18, **dadurch gekennzeichnet, dass** das zweite Schaltelement (B) räumlich gesehen zumindest teilweise in einem Bereich radial oberhalb des zweiten Planetenradsatzes (RS2) angeordnet ist, und dass das erste Schaltelement (A) auf der Seite des zweiten Planetenradsatzes (RS2) angeordnet ist, die dem dritten Planetenradsatz (RS3) gegenüber liegt.

20. Mehrstufengetriebe nach einem der Ansprüche 1 bis 4 oder 13 bis 19, **dadurch gekennzeichnet, dass** das erste und zweite Schaltelement (A, B) räumlich gesehen axial unmittelbar nebeneinander angeordnet sind.

21. Mehrstufengetriebe nach einem der Ansprüche 1 bis 4 oder 13 bis 19, **dadurch gekennzeichnet, dass** das erste und zweite Schaltelement (A, B) radial betrachtet im Wesentlichen übereinander angeordnet sind.

22. Mehrstufengetriebe nach einem der Ansprüche 1 bis 4 oder 13 bis 21, **dadurch gekennzeichnet, dass** das vierte Schaltelement (D) auf der Seite des ersten Planetenradsatzes (RS1) angeordnet ist, die dem vierten Planetenradsatz (RS4) gegenüber liegt, und dass das fünfte Schaltelement (E) auf der Seite des ersten Planetenradsatzes RS1 angeordnet ist, die dem dritten Planetenradsatzs (RS3) gegenüber liegt

23. Mehrstufengetriebe nach einem der Ansprüche 1 bis 4 oder 13 bis 22, **dadurch gekennzeichnet, dass** das fünfte Schaltelement (E) räumlich gesehen in einem Bereich axial zwischen dem ersten und vierten Planetenradsatz (RS1, RS4) angeordnet sind

24. Mehrstufengetriebe nach einem der Ansprüche 1 bis 23, **dadurch gekennzeichnet, dass** das dritte Schaltelement (C) räumlich gesehen zumindest teilweise axial zwischen dem ersten und dritten Planetenradsatz (RS1, RS3) angeordnet ist

25. Mehrstufengetriebe nach einem der Ansprüche 1 bis 23, **dadurch gekennzeichnet, dass** das dritte Schaltelement (C) räumlich gesehen axial zwischen dem ersten und vierten Planetenradsatz (RS1, RS4) angeordnet ist.

26. Mehrstufengetriebe nach einem der Ansprüche 1 bis 25, **dadurch gekennzeichnet, dass** das dritte Schaltelement (C) unmittelbar an den ersten Planetenradsatz (RS1) angrenzt

27. Mehrstufengetriebe nach einem der Ansprüche 1 bis 25, **dadurch gekennzeichnet, dass** das dritte Schaltelement (C) unmittelbar an den dritten Planetenradsatz (RS3) angrenzt.

28. Mehrstufengetriebe nach einem der vorstehenden Ansprüche, **dadurch gekennzeichnet, dass** das vierte Schaltelement (D) räumlich gesehen näher am dritten Planetenradsatz (RS3) angeordnet ist als das fünfte Schaltelement (E).

29. Mehrstufengetriebe nach einem der vorstehenden Ansprüche, **dadurch gekennzeichnet, dass** das vierte Schaltelement (D) unmittelbar an den dritten Planetenradsatz (RS3) angrenzt

30. Mehrstufengetriebe nach einem der vorstehenden Ansprüche, **dadurch gekennzeichnet, dass** das vierte Schaltelement (D) räumlich gesehen zumindest teilweise radial über den dritten Planetenradsatz (RS3) angeordnet ist

31. Mehrstufengetriebe nach einem der vorstehenden Ansprüche, **dadurch gekennzeichnet, dass** zwischen den Wellen (AN, AB, 1, 2, 3, 4, 5, 6, 7, 8) und dem Gehäuse (GG) des Getriebes zusätzliche Freiläufe einsetzbar sind.

32. Mehrstufengetriebe nach einem der Ansprüche 1 bis 31, **dadurch gekennzeichnet, dass** Antrieb und Abtrieb des Getriebes auf gegenüberliegenden Seiten des Gehäuses (GG) vorgesehen sind.

33. Mehrstufengetriebe nach einem der Ansprüche 1 bis 31, **dadurch gekennzeichnet, dass** Antrieb und Abtrieb des Getriebes auf der gleichen Seite des Gehäuses (GG) vorgesehen sind.

34. Mehrstufengetriebe nach einem der vorstehenden Ansprüche, **dadurch gekennzeichnet, dass** ein Achs- und/oder ein Verteilerdifferential auf der Antriebsseite oder der Abtriebsseite des Getriebes angeordnet ist.

35. Mehrstufengetriebe nach einem der vorstehenden Ansprüche, **dadurch gekennzeichnet, dass** die Antriebswelle (AN) durch ein Kupplungselement von einem Antriebs-Motor des Kraftfahrzeugs trennbar ist.

36. Mehrstufengetriebe nach Anspruch 35, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

37. Mehrstufengetriebe nach einem der vorstehenden Ansprüche, **dadurch gekennzeichnet, dass** in Kraftflussrichtung hinter dem Getriebe ein externes Anfahrelement angeordnet ist, wobei die Antriebswelle (AN) verdrehfest oder drehelastisch mit einer Kurbelwelle des Antriebs-Motors verbunden ist.

38. Mehrstufengetriebe nach einem der vorstehenden Ansprüche, **dadurch gekennzeichnet, dass** das Anfahren des Kraftfahrzeugs mittels eines getriebeinternen Schaltelements, insbesondere mittels des ersten oder des zweiten Schaltelementes (A, B) des Getriebes erfolgt, wobei die Antriebswelle (AN) ständig verdrehfest oder drehelastisch mit der Kurbelwelle des Antriebs-Motors verbunden ist.

39. Mehrstufengetriebe nach einem der vorstehenden Ansprüche, **dadurch gekennzeichnet, dass** zwischen Antriebs-Motor und Getriebe ein Torsionsschwingungsdämpfer angeordnet ist.

40. Mehrstufengetriebe nach einem der vorstehenden Ansprüche, **dadurch gekennzeichnet, dass** an jeder Welle (AN, AB, 1, 2, 3, 4, 5, 6, 7, 8) des Getriebes eine verschleißfreie Bremse oder ein Nebenabtrieb zum Antrieb von zusätzlichen Aggregaten oder eine elektrische Maschine als Generator und/oder als zusätzliche Antriebsmaschine anbringbar ist.

41. Mehrstufengetriebe nach einem der vorstehenden Ansprüche, **dadurch gekennzeichnet, dass** als Schaltelemente (A, B; C, D, E) reibschlüssige Kupplungen bzw. reibschlüssige Bremsen - insbesondere Lamellenkupplungen, Bandbremsen und/oder Konuskupplungen - und/oder formschlüssige Kupplungen bzw. formschlüssige Bremsen - insbesondere Konuskupplungen und/oder Klauenkupplungen - vorgesehen sind.

## Claims

1. Multistep gear mechanism of planetary construction, in particular automatic transmission for a motor vehicle, comprising one drive shaft (AN) and one output shaft (AB), four planetary gear sets (RS1, RS2, RS3, RS4), at least eight rotatable shafts (1, 2, 3, 4, 5, 6, 7, 8) and five switching elements (A, B, C, D, E), the selective engagement of which brings about different transmission ratios between the drive shaft (AN) and the output shaft (AB), with the result that eight forward gears and at least one reverse gear can be realized,
■ an internal gear (HO1) of the first planetary gear set (RS1) and the drive shaft (AN) being connected fixedly to one another so as to rotate together and forming the first shaft (1),
■ a web (ST4) of the fourth planetary gear set (RS4) and the output shaft (AB) being connected fixedly to one another so as to rotate together and forming the second shaft (2),
■ a sun gear (SO2) of the second planetary gear set (RS2) and a sun gear (SO3) of the third planetary gear set (RS3) being connected fixedly to one another so as to rotate together and forming the third shaft (3),
■ an internal gear (H02) of the second planetary gear set (RS2) forming the fourth shaft (4),
■ an internal gear (H03) of the third planetary gear set (RS3) forming the fifth shaft (5),
■ a web (ST2) of the second planetary gear set (RS2) and an internal gear (H04) of the fourth planetary gear set (RS4) being connected fixedly to one another so as to rotate together and forming the sixth shaft (6),
■ a sun gear (SO1) of the first planetary gear set (RS1) and a sun gear (SO4) of the fourth planetary gear set (RS4) being connected fixedly to one another so as to rotate together and forming the seventh shaft (7), and
■ a web (ST1) of the first planetary gear set (RS1) and a web (ST3) of the third planetary gear set (RS3) being connected fixedly to one another so as to rotate together and forming the eighth shaft (8),
and
■ the first switching element (A) being arranged in the force flow between the third shaft (3) and a housing (GG) of the transmission,
■ the second switching element (B) being arranged in the force flow between the fourth shaft (4) and the housing (GG) of the transmission,
■ the third switching element (C) being arranged in the force flow either between the first and seventh shafts (1, 7) or between the first and eighth shafts (1, 8) or between the seventh and eighth shafts (7, 8),
■ the fourth switching element (D) being arranged in the force flow between the fifth and sixth shafts (5, 6), and
■ the fifth switching element (E) being arranged in the force flow between the fifth and seventh shafts (5, 7).

2. Multistep gear mechanism according to Claim 1, **characterized in that**
■ the first forward gear results from closure of the first, second and third switching elements (A, B, C),
■ the second forward gear results from closure of the first, second and fifth switching elements (A, B, E),
■ the third forward gear results from closure of the second, third and fifth switching elements (B, C, E),
■ the fourth forward gear results from closure of the second, fourth and fifth switching elements (B, D, E),
■ the fifth forward gear results from closure of the second, third and fourth switching elements (B, C, D),
■ the sixth forward gear results from closure of the third, fourth and fifth switching elements (C, D, E),
■ the seventh forward gear results from closure of the first, third and fourth switching elements (A, C, D), and
■ the eighth forward gear results from closure of the first, fourth and fifth switching elements (A, D, E).

3. Multistep gear mechanism according to Claim 1 or 2, **characterized in that** a reverse gear results from closure of the first, second and fourth switching elements (A, B, D).

4. Multistep gear mechanism according to Claim 1, 2 or 3, **characterized in that** all four planetary gear sets (RS1, RS2, RS3, RS4) are configured as minus planetary gear sets.

5. Multistep gear mechanism according to one of Claims 1 to 4, **characterized in that** the planetary gear sets (RS1, RS2, RS3, RS4) are arranged coaxially with respect to one another and behind one another in the axial direction in a sequence "RS1, RS3, RS2, RS4".

6. Multistep gear mechanism according to Claim 5, **characterized in that**
■ sections of the seventh shaft (7) run centrically within the sixth shaft (6),
■ sections of the sixth shaft (6) run centrically within the third shaft (3), and
■ the eighth shaft (8) reaches completely around the fifth shaft (5), the fourth and fifth switching elements (D, E) and the third planetary gear set (RS3) in the axial direction.

7. Multistep gear mechanism according to one of the preceding claims, **characterized in that,** viewed in three dimensions, the first and second switching elements (A, B) are arranged axially directly next to one another in a region radially above the planetary gear sets (RS1 to RS4).

8. Multistep gear mechanism according to one of the preceding claims, **characterized in that,** viewed in three dimensions, the second switching element (B) is arranged at least partially radially above the second planetary gear set (RS2), and **in that** the first switching element (A) is arranged at least partially in a region axially between the second and third planetary gear sets (RS2, RS3) and/or at least partially in a region radially above the third planetary gear set (RS3).

9. Multistep gear mechanism according to one of the preceding claims, **characterized in that,** viewed in three dimensions, the fourth and fifth switching elements (D, E) are arranged at least partially axially between the first and third planetary gear sets (RS1, RS3).

10. Multistep gear mechanism according to one of Claims 1 to 9, **characterized in that** the first shaft (1) reaches completely over the third switching element (C) in the axial and radial directions.

11. Multistep gear mechanism according to one of Claims 1 to 10, **characterized in that,** viewed in three dimensions, the third switching element (C) is arranged on that side of the first planetary gear set (RS1) which lies opposite the third planetary gear set (RS3).

12. Multistep gear mechanism according to one of Claims 1 to 9, **characterized in that** the eighth shaft (8) reaches completely over the third switching element (C) in the axial and radial directions.

13. Multistep gear mechanism according to one of Claims 1 to 4, **characterized in that** the planetary gear sets (RS1, RS2, RS3, RS4) are arranged coaxially with respect to one another and behind one another in the axial direction in a sequence "RS2, RS3, RS1, RS4".

14. Multistep gear mechanism according to one of Claims 1 to 4 or 13, **characterized in that** the four planetary gear sets (RS1, RS2, RS3, RS4) are reached through centrically in the axial direction in each case at most by one shaft (AN or 1) of the transmission.

15. Multistep gear mechanism according to one of Claims 1 to 4, 13 or 14, **characterized in that** the drive shaft (AN) or the first shaft (1) of the transmission reaches centrically through the second and third planetary gear sets (RS2, RS3) in the axial direction.

16. Multistep gear mechanism according to one of Claims 1 to 4, 13 or 14, **characterized in that** the drive shaft (AN) or the first shaft (1) of the transmission reaches centrically through the fourth and first planetary gear sets (RS4, RS1) in the axial direction.

17. Multistep gear mechanism according to one of Claims 1 to 4 or 13 to 16, **characterized in that**
■ the eighth shaft (8) reaches completely over the third switching element (C) and the first planetary gear set (RS1) in the axial and radial directions,
■ the fifth shaft (5) reaches completely over the eighth shaft (8) in the axial and radial directions, and
■ the sixth shaft (6) reaches completely over the third planetary gear set (RS3), the fifth shaft (5) and the fifth switching element (E) in the axial and radial directions.

18. Multistep gear mechanism according to one of Claims 1 to 4 or 13 to 17, **characterized in that** the third shaft (3) is mounted rotatably on the drive shaft (AN) or on a hub which is fixed to the housing.

19. Multistep gear mechanism according to one of Claims 1 to 4 or 13 to 18, **characterized in that,** viewed in three dimensions, the second switching element (B) is arranged at least partially in a region radially above the second planetary gear set (RS2), and **in that** the first switching element (A) is arranged on that side of the second planetary gear set (RS2) which lies opposite the third planetary gear set (RS3).

20. Multistep gear mechanism according to one of Claims 1 to 4 or 13 to 19, **characterized in that,** viewed in three dimensions, the first and second switching elements (A, B) are arranged axially directly next to one another.

21. Multistep gear mechanism according to one of Claims 1 to 4 or 13 to 19, **characterized in that,** viewed radially, the first and second switching elements (A, B) are arranged substantially above one another.

22. Multistep gear mechanism according to one of Claims 1 to 4 or 13 to 21, **characterized in that** the fourth switching element (D) is arranged on that side of the first planetary gear set (RS1) which lies opposite the fourth planetary gear set (RS4), and **in that** the fifth switching element (E) is arranged on that side of the first planetary gear set RS1 which lies opposite the third planetary gear set (RS3).

23. Multistep gear mechanism according to one of Claims 1 to 4 or 13 to 22, **characterized in that**, viewed in three dimensions, the fifth switching element (E) is arranged in a region axially between the first and fourth planetary gear sets (RS1, RS4).

24. Multistep gear mechanism according to one of Claims 1 to 23, **characterized in that**, viewed in three dimensions, the third switching element (C) is arranged at least partially axially between the first and third planetary gear sets (RS1, RS3).

25. Multistep gear mechanism according to one of Claims 1 to 23, **characterized in that**, viewed in three dimensions, the third switching element (C) is arranged axially between the first and fourth planetary gear sets (RS1, RS4).

26. Multistep gear mechanism according to one of Claims 1 to 25, **characterized in that** the third switching element (C) directly adjoins the first planetary gear set (RS1).

27. Multistep gear mechanism according to one of Claims 1 to 25, **characterized in that** the third switching element (C) directly adjoins the third planetary gear set (RS3).

28. Multistep gear mechanism according to one of the preceding claims, **characterized in that,** viewed in three dimensions, the fourth switching element (D) is arranged more closely to the third planetary gear set (RS3) than the fifth switching element (E).

29. Multistep gear mechanism according to one of the preceding claims, **characterized in that** the fourth switching element (D) directly adjoins the third planetary gear set (RS3).

30. Multistep gear mechanism according to one of the preceding claims, **characterized in that,** viewed in three dimensions, the fourth switching element (D) is arranged at least partially radially above the third planetary gear set (RS3).

31. Multistep gear mechanism according to one of the preceding claims, **characterized in that** additional free wheels can be inserted between the shafts (AN, AB, 1, 2, 3, 4, 5, 6, 7, 8) and the housing (GG) of the transmission.

32. Multistep gear mechanism according to one of Claims 1 to 31, **characterized in that** the input drive and the output drive of the transmission are provided on opposite sides of the housing (GG).

33. Multistep gear mechanism according to one of Claims 1 to 31, **characterized in that** the input drive and the output drive of the gear mechanism are provided on the same side of the housing (GG).

34. Multistep gear mechanism according to one of the preceding claims, **characterized in that** an axle differential and/or a distributor differential is arranged on the drive side or the driven side of the gear mechanism.

35. Multistep gear mechanism according to one of the preceding claims, **characterized in that** the drive shaft (AN) can be disconnected from a drive engine of the motor vehicle by a clutch element.

36. Multistep gear mechanism according to Claim 35, **characterized in that** a hydrodynamic converter, a hydraulic clutch, a dry start-up clutch, a wet start-up clutch, a magnetic particle coupling or a centrifugal clutch is provided as the clutch element.

37. Multistep gear mechanism according to one of the preceding claims, **characterized in that** an external start-up element is arranged in the direction of force flow behind the gear mechanism, the drive shaft (AN) being connected rotatably fixedly or rotatably elastically to a crankshaft of the drive engine.

38. Multistep gear mechanism according to one of the preceding claims, **characterized in that** starting up of the motor vehicle is carried out by means of a switching element inside the gear mechanism, in particular by means of the first or the second switching element (A, B) of the gear mechanism, the drive shaft (AN) being connected permanently rotatably fixedly or rotatably elastically to the crankshaft of the drive engine.

39. Multistep gear mechanism according to one of the preceding claims, **characterized in that** a torsional vibration damper is arranged between the drive engine and the gear mechanism.

40. Multistep gear mechanism according to one of the preceding claims, **characterized in that** a wear-free brake or an auxiliary drive for driving additional assemblies or an electric machine as a generator and/or as an additional drive machine can be attached to every shaft (AN, AB, 1, 2, 3, 4, 5, 6, 7, 8) of the gear mechanism.

41. Multistep gear mechanism according to one of the preceding claims, **characterized in that** frictional clutches or frictional brakes, in particular multiple disc clutches, belt brakes and/or cone clutches, and/or positively locking clutches or positively locking brakes, in particular cone clutches and/or claw clutches, are provided as switching elements (A, B, C, D, E).

## Revendications

1. Boîte de vitesses à rapports multiples de construction planétaire, en particulier boîte de vitesses automatique pour un véhicule automobile, comprenant un arbre d'entraînement (AN) et un arbre de sortie (AB), quatre trains planétaires (RS1, RS2, RS3, RS4), au moins huit arbres rotatifs (1, 2, 3, 4, 5, 6, 7, 8) ainsi que cinq éléments de commutation (A, B, C, D, E), dont l'engagement sélectif donne lieu à différents rapports de multiplication entre l'arbre d'entraînement (AN) et l'arbre de sortie (AB), de sorte que huit vitesses de marche avant et au moins une vitesse de marche arrière puissent être obtenues,
- une couronne (HO1) du premier train planétaire (RS1) et l'arbre d'entraînement (AN) étant connectés l'un à l'autre de manière solidaire en rotation et formant le premier arbre (1),
- une tige (ST4) du quatrième train planétaire (RS4) et l'arbre de sortie (AB) étant connectés de manière solidaire en rotation et formant le deuxième arbre (2),
- une roue solaire (SO2) du deuxième train planétaire (RS2) et une roue solaire (SO3) du troisième train planétaire (RS3) étant connectées de manière solidaire en rotation et formant le troisième arbre (3),
- une couronne (HO2) du deuxième train planétaire (RS2) formant le quatrième arbre (4),
- une couronne (HO3) du troisième train planétaire (RS3) formant le cinquième arbre (5),
- une tige (ST2) du deuxième train planétaire (RS2) et une couronne (HO4) du quatrième train planétaire (RS4) étant connectées de manière solidaire en rotation et formant le sixième arbre (6),
- une roue solaire (SO1) du premier train planétaire (RS1) et une roue solaire (SO4) du quatrième train planétaire (RS4) étant connectées de manière solidaire en rotation et formant le septième arbre (7)
et
- une tige (ST1) du premier train planétaire (RS1) et une tige (ST3) du troisième train planétaire (RS3) étant connectées de manière solidaire en rotation et formant le huitième arbre (8),
et
- le premier élément de commutation (A) étant disposé dans le flux de forces entre le troisième arbre (3) et un carter (GG) de la boîte de vitesses,
- le deuxième élément de commutation (B) étant disposé dans le flux de forces entre le quatrième arbre (4) et le carter (GG) de la boîte de vitesses,
- le troisième élément de commutation (C) étant disposé dans le flux de forces soit entre le premier et le septième arbre (1, 7), soit entre le premier et le huitième arbre (1, 8), soit entre le septième et le huitième arbre (7, 8),
- le quatrième élément de commutation (D) étant disposé dans le flux de forces entre le cinquième et le sixième arbre (5, 6), et
- le cinquième élément de commutation (E) étant disposé dans le flux de forces entre le cinquième et le septième arbre (5, 7).

2. Boîte de vitesses à rapports multiples selon la revendication 1, **caractérisée en ce que**
- la première vitesse de marche avant est obtenue par fermeture du premier, deuxième et troisième élément de commutation (A, B, C),
- la deuxième vitesse de marche avant est obtenue par fermeture du premier, deuxième et cinquième élément de commutation (A, B, E),
- la troisième vitesse de marche avant est obtenue par fermeture du deuxième, troisième et cinquième élément de commutation (B, C, E),
- la quatrième vitesse de marche avant est obtenue par fermeture du deuxième, quatrième et cinquième élément de commutation (B, D, E),
- la cinquième vitesse de marche avant est obtenue par fermeture du deuxième, troisième et quatrième élément de commutation (B, C, D),
- la sixième vitesse de marche avant est obtenue par fermeture du troisième, quatrième et cinquième élément de commutation (C, D, E),
- la septième vitesse de marche avant est obtenue par fermeture du premier, troisième et quatrième élément de commutation (A, C, D), et
- la huitième vitesse de marche avant est obtenue par fermeture du premier, quatrième et cinquième élément de commutation (A, D, E).

3. Boîte de vitesses à rapports multiples selon la revendication 1 ou 2, **caractérisée en ce que** l'on obtient une vitesse de marche arrière par fermeture du premier, deuxième et quatrième élément de commutation (A, B, D).

4. Boîte de vitesses à rapports multiples selon les revendications 1, 2 ou 3, **caractérisée en ce que** les quatre trains planétaires (RS1, RS2, RS3, RS4) sont réalisés sous forme de trains planétaires négatifs.

5. Boîte de vitesses à rapports multiples selon l'une quelconque des revendications 1 à 4, **caractérisée en ce que** les trains planétaires (RS1, RS2, RS3, RS4) sont disposés coaxialement les uns aux autres et les uns derrière les autres dans la direction axiale dans l'ordre "RS1, RS3, RS2, RS4".

6. Boîte de vitesses à rapports multiples selon la revendication 5, **caractérisée en ce que**
- le septième arbre (7) s'étend en partie centralement à l'intérieur du sixième arbre (6),
- le sixième arbre (6) s'étend en partie centralement à l'intérieur du troisième arbre (3), et
- le huitième arbre (8) entoure complètement dans la direction axiale le cinquième arbre (5), le quatrième et le cinquième élément de commutation (D, E) et le troisième train planétaire (RS3).

7. Boîte de vitesses à rapports multiples selon l'une quelconque des revendications précédentes, **caractérisée en ce que** le premier et le deuxième élément de commutation (A, B), vus spatialement, sont disposés axialement immédiatement l'un à côté de l'autre dans une région radialement au-dessus des trains planétaires (RS1 à RS4).

8. Boîte de vitesses à rapports multiples selon l'une quelconque des revendications précédentes, **caractérisée en ce que** le deuxième élément de commutation (B), vu spatialement, est disposé au moins en partie radialement au-dessus du deuxième train planétaire (RS2), et **en ce que** le premier élément de commutation (A) est disposé au moins en partie dans une région axialement entre le deuxième et le troisième train planétaire (RS2, RS3), et/ou au moins en partie dans une région radialement au-dessus du troisième train planétaire (RS3).

9. Boîte de vitesses à rapports multiples selon l'une quelconque des revendications précédentes, **caractérisée en ce que** le quatrième et le cinquième élément de commutation (D, E), vus spatialement, sont disposés au moins en partie axialement entre le premier et le troisième train planétaire (RS1, RS3).

10. Boîte de vitesses à rapports multiples selon l'une quelconque des revendications 1 à 9, **caractérisée en ce que** le premier arbre (1) vient en prise complètement par-dessus le troisième élément de commutation (C) dans la direction axiale et radiale.

11. Boîte de vitesses à rapports multiples selon l'une quelconque des revendications 1 à 10, **caractérisée en ce que** le troisième élément de commutation (C), vu spatialement, est disposé du côté du premier train planétaire (RS1) opposé au troisième train planétaire (RS3).

12. Boîte de vitesses à rapports multiples selon l'une quelconque des revendications 1 à 9, **caractérisée en ce que** le huitième arbre (8) vient en prise complètement par-dessus le troisième élément de commutation (C) dans la direction axiale et radiale.

13. Boîte de vitesses à rapports multiples selon l'une quelconque des revendications 1 à 4, **caractérisée en ce que** les trains planétaires (RS1, RS2, RS3, RS4) sont disposés coaxialement les uns aux autres et les uns derrière les autres dans la direction axiale, dans l'ordre "RS2, RS3, RS1, RS4".

14. Boîte de vitesses à rapports multiples selon l'une quelconque des revendications 1 à 4 ou 13, **caractérisée en ce que** les quatre trains planétaires (RS1, RS2, RS3, RS4) sont traversés à chaque fois au plus par un arbre (AN ou 1) de la boîte de vitesses centralement dans la direction axiale.

15. Boîte de vitesses à rapports multiples selon l'une quelconque des revendications 1 à 4, 13 ou 14, **caractérisée en ce que** l'arbre d'entraînement (AN) ou le premier arbre (1) de la boîte de vitesses traverse le deuxième et le troisième train planétaire (RS2, RS3) centralement dans la direction axiale.

16. Boîte de vitesses à rapports multiples selon l'une quelconque des revendications 1 à 4, 13 ou 14, **caractérisée en ce que** l'arbre d'entraînement (AN) ou le premier arbre (1) de la boîte de vitesses vient en prise à travers le quatrième et le premier train planétaire (RS4, RS1) centralement dans la direction axiale.

17. Boîte de vitesses à rapports multiples selon l'une quelconque des revendications 1 à 4 ou 13 à 16, **caractérisée en ce que**
- le huitième arbre (8) vient en prise complètement par-dessus le troisième élément de commutation (C) et le premier train planétaire (RS1) dans la direction axiale et radiale,
- le cinquième arbre (5) vient en prise complètement par-dessus le huitième arbre (8) dans la direction axiale et radiale, et
- le sixième arbre (6) vient en prise complètement par dessus le troisième train planétaire (RS3), le cinquième arbre (5) et le cinquième élément de commutation (E) dans la direction axiale et radiale.

18. Boîte de vitesses à rapports multiples selon l'une quelconque des revendications 1 à 4 ou 13 à 17, **caractérisée en ce que** le troisième arbre (3) est monté à rotation sur l'arbre d'entraînement (AN) ou sur un moyeu fixé au carter.

19. Boîte de vitesses à rapports multiples selon l'une quelconque des revendications 1 à 4 ou 13 à 18, **caractérisée en ce que** le deuxième élément de commutation (B), vu spatialement, est disposé au moins en partie dans une région radialement au-dessus du deuxième train planétaire (RS2), et **en ce que** le premier élément de commutation (A) est disposé du côté du deuxième train planétaire (RS2) qui est opposé au troisième train planétaire (RS3).

20. Boîte de vitesses à rapports multiples selon l'une quelconque des revendications 1 à 4 ou 13 à 19, **caractérisée en ce que** le premier et le deuxième élément de commutation (A, B), vus spatialement, sont disposés axialement immédiatement l'un à côté de l'autre.

21. Boîte de vitesses à rapports multiples selon l'une quelconque des revendications 1 à 4 ou 13 à 19, **caractérisée en ce que** le premier et le deuxième élément de commutation (A, B), considérés radialement, sont disposés essentiellement l'un au-dessus de l'autre.

22. Boîte de vitesses à rapports multiples selon l'une quelconque des revendications 1 à 4 ou 13 à 21, **caractérisée en ce que** le quatrième élément de commutation (D) est disposé du côté du premier train planétaire (RS1) qui est opposé au quatrième train planétaire (RS4), et **en ce que** le cinquième élément de commutation (E) est disposé du côté du premier train planétaire (RS1) qui est opposé au troisième train planétaire (RS3).

23. Boîte de vitesses à rapports multiples selon l'une quelconque des revendications 1 à 4 ou 13 à 22, **caractérisée en ce que** le cinquième élément de commutation (E), vu spatialement, est disposé dans une région axialement entre le premier et le quatrième train planétaire (RS1, RS4).

24. Boîte de vitesses à rapports multiples selon l'une quelconque des revendications 1 à 23, **caractérisée en ce que** le troisième élément de commutation (C), vu spatialement, est disposé au moins en partie axialement entre le premier et le troisième train planétaire (RS1, RS3).

25. Boîte de vitesses à rapports multiples selon l'une quelconque des revendications 1 à 23, **caractérisée en ce que** le troisième élément de commutation (C), vu spatialement, est disposé axialement entre le premier et le quatrième train planétaire (RS1, RS4).

26. Boîte de vitesses à rapports multiples selon l'une quelconque des revendications 1 à 25, **caractérisée en ce que** le troisième élément de commutation (C) est immédiatement adjacent au premier train planétaire (RS1).

27. Boîte de vitesses à rapports multiples selon l'une quelconque des revendications 1 à 25, **caractérisée en ce que** le troisième élément de commutation (C) est immédiatement adjacent au troisième train planétaire (RS3).

28. Boîte de vitesses à rapports multiples selon l'une quelconque des revendications précédentes, **caractérisée en ce que** le quatrième élément de commutation (D), vu spatialement, est disposé plus près du troisième train planétaire (RS3) que le cinquième élément de commutation (E).

29. Boîte de vitesses à rapports multiples selon l'une quelconque des revendications précédentes, **caractérisée en ce que** le quatrième élément de commutation (D) est immédiatement adjacent au troisième train planétaire (RS3).

30. Boîte de vitesses à rapports multiples selon l'une quelconque des revendications précédentes, **caractérisée en ce que** le quatrième élément de commutation (D), vu spatialement, est disposé au moins en partie radialement par-dessus le troisième train planétaire (RS3).

31. Boîte de vitesses à rapports multiples selon l'une quelconque des revendications précédentes, **caractérisée en ce que** des roues libres supplémentaires peuvent être insérées entre les arbres (AN, AB, 1, 2, 3, 4, 5, 6, 7, 8) et le carter (GG) de la boîte de vitesses.

32. Boîte de vitesses à rapports multiples selon l'une quelconque des revendications 1 à 31, **caractérisée en ce que** l'entraînement et la sortie de la boîte de vitesses sont prévus sur des côtés opposés du carter (GG).

33. Boîte de vitesses à rapports multiples selon l'une quelconque des revendications 1 à 31, **caractérisée en ce que** l'entraînement et la sortie de la boîte de vitesses sont disposés du même côté du carter (GG).

34. Boîte de vitesses à rapports multiples selon l'une quelconque des revendications précédentes, **caractérisée en ce qu'**un différentiel d'essieu et/ou un différentiel intermédiaire est disposé sur le côté d'entraînement ou le côté de sortie de la boîte de vitesses.

35. Boîte de vitesses à rapports multiples selon l'une quelconque des revendications précédentes, **caractérisée en ce que** l'arbre d'entraînement (AN) peut être séparé par un élément d'embrayage d'un moteur d'entraînement du véhicule automobile.

36. Boîte de vitesses à rapports multiples selon la revendication 35, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique ou un embrayage à force centrifuge.

37. Boîte de vitesses à rapports multiples selon l'une quelconque des revendications précédentes, **caractérisée en ce qu'**un élément de démarrage externe est disposé dans la direction du flux de forces derrière la boîte de vitesses, l'arbre d'entraînement (AN) étant connecté de manière solidaire en rotation ou élastique en rotation à un vilebrequin du moteur d'entraînement.

38. Boîte de vitesses à rapports multiples selon l'une quelconque des revendications précédentes, **caractérisée en ce que** le démarrage du véhicule automobile s'effectue au moyen d'un élément de commutation interne à la boîte de vitesses, en particulier au moyen du premier ou du deuxième élément de commutation (A, B) de la boîte de vitesses, l'arbre d'entraînement (AN) étant connecté constamment de manière solidaire en rotation ou élastique en rotation au vilebrequin du moteur d'entraînement.

39. Boîte de vitesses à rapports multiples selon l'une quelconque des revendications précédentes, **caractérisée en ce que** l'on dispose un amortisseur des oscillations de torsion entre le moteur d'entraînement et la boîte de vitesses.

40. Boîte de vitesses à rapports multiples selon l'une quelconque des revendications précédentes, **caractérisée en ce que** l'on peut monter sur chaque arbre (AN, AB, 1, 2, 3, 4, 5, 6, 7, 8) de la boîte de vitesses un frein sans usure ou une prise de force auxiliaire pour l'entraînement d'unités supplémentaires ou un moteur électrique en tant que générateur et/ou en tant que moteur d'entraînement supplémentaire.

41. Boîte de vitesses à rapports multiples selon l'une quelconque des revendications précédentes, **caractérisée en ce que** l'on prévoit comme éléments de commutation (A, B, C, D, E) des embrayages à friction ou des freins à friction - notamment des embrayages à disques, des freins à ruban et/ou des embrayages coniques - et/ou des embrayages à engagement positif ou des freins à engagement positif, notamment des embrayages coniques et/ou des embrayages à griffes.
